(19) Europäisches Patentamt
European Patent Office
Office européen des brevets

(11) Publication number: **0 259 840 B1**

(12) **EUROPEAN PATENT SPECIFICATION**

(45) Date of publication of patent specification: **12.08.92**

(51) Int. Cl.$^5$: **G11B 5/64**, G11B 5/84, H01F 41/18

(21) Application number: **87113123.1**

(22) Date of filing: **08.09.87**

(54) **Vertical magnetic medium and method of manufacturing the same.**

(30) Priority: **09.09.86 JP 210590/86**
**09.09.86 JP 210591/86**
**16.02.87 JP 31606/87**

(43) Date of publication of application:
**16.03.88 Bulletin 88/11**

(45) Publication of the grant of the patent:
**12.08.92 Bulletin 92/33**

(84) Designated Contracting States:
**DE GB NL**

(56) References cited:
**US-A- 4 609 962**

**PATENT ABSTRACTS OF JAPAN, vol. 6, no. 151 (E-124)[1029], 11th August 1982; & JP-A-57 73 913 (TEIJIN K.K.) 08-05-1982**

**PATENT ABSTRACTS OF JAPAN, vol. 8, no. 259 (P-317)[1696], 28th November 1984; & JP-A-59 129 934 (NIPPON DENKI K.K.) 26-07-1984**

**IEEE TRANSACTIONS ON MAGNETICS, vol. MAG-23, no. 5, September 1987, (Part II of Two Parts), paper presented at International Magnetics Conference, Tokyo, 17th April 1987, pages 3651-3654, IEEE, New York, US; K.INOUE et al.: "Co-Cr-W-C alloy thin films for perpendicular recording media"**

(73) Proprietor: **UBE INDUSTRIES, LTD.**
**12-32, Nishihonmachi 1-chome**
**Ube-shi, Yamaguchi-ken 755(JP)**

(72) Inventor: **Inoue, Kazuo Ube Kohsan Kabushiki Kaisha**
**Ube Kenkyushonai 1978-5, Oaza Kogushi**
**Ube-shi Yamaguchi(JP)**
Inventor: **Yoshikiyo, Motozo Ube Kohsan Kabushiki Kaisha**
**Ube Kenkyushonai 1978-5, Oaza Kogushi**
**Ube-shi Yamaguchi(JP)**
Inventor: **Yoshii, Shizuka Ube Kohsan Kabushiki Kaisha**
**Ube Kenkyushonai 1978-5, Oaza Kogushi**
**Ube-shi Yamaguchi(JP)**

(74) Representative: **Strehl, Schübel-Hopf, Groening**
**Maximilianstrasse 54 Postfach 22 14 55**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention concerns a cobalt-chromium system vertical magnetic recording medium of excellent abrasion resistance and corrosion resistance and a method of manufacturing the same.

Prior Art

With the increasing requirement for high density magnetic recording, a vertical recording system has been investigated in recent years as a substitute for conventional longitudinal recording system. It has been known that Co-Cr system alloys comprising Co as the main ingredient and Cr added thereto are suitable as the magnetic recording medium for use in the vertical recording system. Vertical magnetic recording media have generally been made by forming the films of the alloys on various kinds of substrates by means of sputtering, vacuum deposition, plating, CVD, etc.

However, in the method of using such metal films as magnetic films, since the lubricating performance is poor as compared with that in the method of coating magnetic powder generally used so far in the conventional longitudinal recording system, there is a problem of abrasion resistance of the metal films. Particularly, Co-Cr system binary alloys are poor in the abrasion resistance and result in many problems upon practical use. The problem is particularly significant in floppy discs or magnetic tapes in which a magnetic head is always in contact with a magnetic film and this causes a remarkable hindrance to the practical use of a vertical magnetic recording medium using Co-Cr system binary alloys. Further, there has been known vertical magnetic recording media comprising a Co-Cr-W magnetic film as a sort of Co-Cr system magnetic films (refer to Japanese Patent Application Laying Open Nos. Sho 59-65417, Sho 59-129934 and Sho 57-73913) and similar problems are also found in these films. In view of the above, provision of an abrasion resistance protection film to the surface of the magnetic film has been conducted as a method for overcoming the problems. While abrasion resistant material ($SiO_2$, etc.), lubricating material (BN, etc.) and the like have been studied as the protection film, there have yet been obtained no suitable material capable of satisfying the practical requirements such as reduced-thickness, excellent abrasion resistance and lubricating performance, as well as excellent bondability with the magnetic film. In US-A-4 609 962 a layer of a chromium compound is used to improve the weather resistance of the magnetic film. Particularly, in the high density recording using the vertical magnetic recording, since it is necessary to reduce the distance between the magnetic head and the magnetic film as much as possible, and an extremely thin and abrasion resistant protection film is required.

SUMMARY OF THE INVENTION

The object of the present invention is to provide a vertical magnetic recording medium having excellent abrasion resistance in the magnetic film and extremely excellent in the vertical magnetic recording characteristic capable of thoroughly dissolving the problems of the abrasion resistance in the vertical magnetic recording medium using Co-Cr system alloys as described above.

Another object of this invention is to provide a method of manufacturing a vertical magnetic recording medium having excellent abrasion resistance and also excellent magnetic recording characteristics.

The present invention provides a vertical magnetic recording medium of excellent abrasion resistance, comprising a thin alloy film containing Co, Cr, W and C as the essential ingredients, wherein the Co content is from 40 to 73 % by weight, the Cr content is from 23 to 32 % by weight, the W content is from 4 to 25 % by weight and the C content is from 0.1 to 3 % by weight.

The present invention also provides a method of manufacturing a vertical magnetic recording medium in which a thin alloy film containing Co, Cr, W and C as the essential ingredient is prepared by way of a sputtering process, wherein an alloy comprising each of the above-mentioned elements is used as a sputtering target.

BRIEF DESCRIPTION OF THE DRAWINGS

Figure 1 is a graph illustrating a magnetization curve measuring the magnetic characteristics of an alloy target of Example 1 according to the present invention by a vibrating sample magnetometer;

Figure 2 is a graph illustrating an X-ray diffraction pattern of a thin magnetic film for the vertical magnetic recording medium according to the present invention, Figure 3 is a graph illustrating a rocking curve, Figure 4 is a graph illustrating a magnetization curve measured by a vibrating sample magnetometer;

Figures 5 through 7 and Figures 11 through 21 are, respectively, X-ray diffraction pattern, rocking curves and magnetization curves of the thin magnetic films for the vertical magnetic recording medium according to the present invention;

Figure 8 is a graph illustrating the result of the abrasion resistance test of the thin magnetic films for the vertical magnetic recording medium according to the present invention;

Figure 9 is an electron microscopic photograph showing the metal composition of a quarternary thin alloy film according to the present invention and Figure 10 is an electron microscopic photograph showing the metal composition of Co-Cr binary thin alloy film;

Figures 22 through 24 are, respectively, X-ray diffraction pattern, rocking curve and magnetization curve for the thin Co-Cr-W ternary alloy film;

Figures 25 through 31, Figures 33 and 34 are, respectively, X-ray diffraction patterns and the rocking curves, of thin films using composite targets, and Figures 32 and 35 are graphs showing the magnetization curves.

## DETAILED DESCRIPTION OF THE INVENTION

The alloy composition of the magnetic film comprising Co-Cr-W-C according to the present invention contains 40 to 73 % by weight of Co, 23 to 32 % by weight of Cr, 4 to 25 % by weight of W and 0.1 to 3 % by weight of C. The alloy has usually been employed as mechanical material under the name of stellite alloy, which is excellent in abrasion resistance, corrosion resistance, heat resistance and high temperature hardness.

As the Co content is decreased from the above-mentioned range, the saturation magnetization is reduced and the abrasion resistance is lowered. While on the other hand, if the content is increased in excess of the above-mentioned range, although the saturation magnetization is increased, this reduces the vertical anisotropy and the abrasion resistance is lowered.

Further, as the Cr content is decreased from the above-mentioned range, although the magnetization is increased, the vertical magnetic anisotropy is reduced and the abrasion resistance is lowered. While on the other hand, if the content is increased in excess of the above-mentioned range, the saturation magnetization is reduced and the abrasion resistance is lowered.

The W ingredient in the Co-Cr-W-C magnetic film according to the present invention forms, together with the C ingredient, a stellite alloy by chemical bonding with Co and Cr and it has a function of improving the abrasion resistance and also improving the orientation of the crystallization and the vertical magnetic anisotropy. As the W content is decreased from the above-mentioned range, the abrasion resistance is lowered and the vertical magnetic anisotropy is also reduced. While on the other hand, if the content is increased in excess of the above-mentioned range, the saturation magnetization is reduced.

The C ingredient in the Co-Cr-W-C magnetic film according to the present invention forms, together with the W ingredient, a stellite alloy by chemical bonding with Co and Cr and it has a function of improving the abrasion resistance. As the C content is decreased from the above-mentioned range, the abrasion resistance is lowered. While on the other hand, as the content is increased in excess of the above-mentioned range, the C-ingredient is partially deposited from the alloy phase failing to form uniform alloy and tends to damage the mechanical property.

In the alloy for use in the present invention, other ingredients than the above-mentioned essential ingredients, for example, Mn, Si, Fe, Ni and Mo may be contained within such a range as not impairing the characteristics, e.g., by about 10 % by weight based on the essential ingredients.

The feature of the present invention lies in obtaining an excellent vertical magnetic recording medium by using a thin alloy film comprising such Co, Cr, W, C. According to the present invention, the thin alloy film obtained by the sputtering process or the like can provide an excellent vertical magnetic recording medium, presumably, because the alloy in the form of a thin film causes phase change and a magnetic alloy having an axis of easy magnetization in a direction perpendicular to the film surface is deposited.

The vertical magnetic recording medium having such a Co-Cr-W-C magnetic film according to the present invention can be obtained by forming a thin film of a Co-Cr-W-C quarternary alloy by a usual method such as sputtering ion beam sputtering, vacuum deposition and ion plating on a substrate.

While there are no particular restrictions, the substrate is made, for example, of polyimide film, polyethylene terephthalate film, aluminum and glass.

By the way, it has been found in the present invention that an excellent vertical magnetic recording medium can be obtained by using an alloy comprising the four elements Co-Cr-W-C as a sputtering target upon preparing a thin alloy film comprising above-mentioned four elements by the sputtering process. Upon preparing a thin alloy film by the sputtering process, a composite target comprising a combination of a plurality of sputtering targets each composed of the individual element may also be used, in addition to the method of using the alloy target according to the present invention. However, a more excellent vertical magnetic recording medium can be obtained according to the present invention in that the respective elements can be mixed well with each other to form a thin alloy film having homogenous and fine structure.

## EXAMPLES

This invention will now be described more specifically referring to Examples.

Example 1

A thin film was prepared by a sputtering process using an alloy target comprising Co-Cr-W-C (26 wt% of Cr, 5 wt% of W, 0.5 wt% of C and the balance of Co). The target has 152.4 mm (6 inch) diameter and 5 mm thickness. The magnetic property of the target is shown in Figure 1.

A magnetron type high frequency dipole sputtering device was used for the sputtering device. A substrate made of pyrex was used.

After fixing on the substrate electrode, the inside of a vacuum chamber was evacuated, and the substrate was heated at 300 °C for one hour to apply degasing treatment. After evacuating the inside of the vacuum vessel to $1 \times 10^{-4}$ Pa before sputtering, Ar gas at 99.9995 % was introduced and sputtering was conducted under the pressure of 0.5 Pa in the system.

Sputtering was conducted at a sputtering voltage of 1.5 kV while heating the substrate to 150 °C.

Figure 2 shows an X-ray diffraction pattern of the resultant thin film. A sharp peak appears at $2\theta = 44.4°$ as in the case of Co-Cr system vertical magnetization film. Figure 3 shows a rocking curve at $2\theta = 44.4°$. The half value width is 2.5° and it can be seen that the material is excellent in the vertical orientation.

Figure 4 shows the magnetization curve for the film measured by a vibrating sample magnetometer. Symbols "//", "⊥" show the magnetization curve in parallel with and vertical to the plane of the film respectively. It can be seen that a film excellent in vertical magnetic anisotropy is formed.

Example 2

A thin film was prepared on a polyimide substrate of about 50 $\mu$m thickness by using an alloy target shown in Example 1. The film was held on a metal support frame of about 20 cm diameter. After fixing them on a substrate electrode, inside of the vacuum chamber was evacuated and the substrate was heated at 300 °C for one hour to conduct degasing treatment. Then, sputtering was conducted in the same manner as in Example 1 to prepare a thin film. In this case, the substrate was water-cooled and sputtering was conducted at a sputtering voltage of 3 kV. Figure 5 shows an X-ray diffraction pattern of the resultant thin film. A sharp peak appears at $2\theta = 44.4°$ as in the case of Co-Cr system vertical magnetization film.

Figure 6 shows a rocking curve at $2\theta = 44.4°$. The half-value width is 3.6° and it can be seen that the film is extremely excellent in vertical orientation. Figure 7 shows the magnetization curve for the film measured by a vibrating sample magnetometer. Symbols "//" and "⊥" show magnetization curves in parallel with and vertical to the plane of the film respectively. It can be seen that the vertical anisotropy is extremely great.

The above-specimen was fabricated into a floppy disc of 133.35 mm (5.25 inch) diameter and put to floppy disc test device. The change of output upon contact with a VTR ring head is shown together with the result for the magnetization film comprising a Co-Cr film manufactured under the same conditions in Figure 8.

Although the output from the Co-Cr system thin film was reduced extremely after 10,000 passes and the output was still reduced gradually thereafter, reduction in the output is small in the Co-Cr-W-C alloy thin film and it can be seen that the film is extremely excellent in the durability.

Corrosion Resistance

The Co-Cr-W-C films is extremely excellent also in the corrosion resistance. For instance, the Co-Cr film is dissolved into diluted hydrochloric acid in several hours, whereas the Co-Cr-W-C film is extremely stable in the diluted hydrochloric acid and shows no change even after immersion for several days.

Fine Structure

Figures 9 and 10 show the metal texture for micro thin slice specimens prepared from the Co-Cr-W-C film and the Co-Cr film by means of an ion etching process and observed under the transmission type electron microscope. While a distinct granular structure is shown for Co-Cr film (Figure 10), a dense coagulated structure of fine stripe-like pattern is observed for the Co-Cr-W-C film (Figure 9), and it is apparent that the structure of the texture is quite different from that of the Co-Cr film. Particularly, the dense structure with no distinct grain boundary is the feature of the Co-Cr-W-C film, which is considered to be a factor of excellent abrasion resistance and corrosion resistance.

Example 3

A thin film was prepared in the same manner as in Example 1 using an alloy target comprising Co-Cr-W-C (28 wt% of Cr, 4 wt% of W, 1 wt% of C and the balance of Co). A substrate made of pyrex glass was used.

Figure 11 shows an X-ray diffraction pattern for the resultant thin film. A sharp peak for the (002) diffraction of Co crystals appears at $2\theta = 44.4$ and it can be seen that the crystals are oriented vertically to the plane of the film. Figure 12 shows a rocking curve at 2 $\theta$ = 44.4°. The half-value width is 3.2°. Figure 13 shows a magnetization curve for the film measured by a vibrating sample magnetometer. It can be seen that a film of extremely excellent vertical anisotropy is formed.

Example 4

A thin film was prepared in the same manner as in Example 1 using an alloy target comprising Co-Cr-W-C (29 wt% of Cr, 8 wt% of W, 1.4 wt% of C and the balance of Co). A substrate made of pyrex glass was used.

Figures 14 and 16 show, respectively, an X-ray diffraction pattern and a rocking curve. The film is extremely excellent in the vertical orientation. The half-value width of the rocking curve is 4.3°. The magnetic property is shown in Figure 16.

Example 5

A thin film was prepared in the same manner as in Example 1 using an alloy target comprising Co-Cr-W-C (30 wt% of Cr, 12 wt% of W, 2.5 wt% of C and the balance of Co). A substrate made of pyrex glass was used.

Figures 17 and 18, respectively, show an X-ray diffraction pattern and a rocking curve. It can be seen that the film is extremely excellent in the vertical orientation. The half-value width of the rocking curve is 5.8°. The magnetic property is shown in Figure 19.

Example 6

A thin film was prepared in the same manner as in Example 2 using an alloy target comprising Co-Cr-W-C (23 wt% of Cr, 20 wt% of W, 1 wt% of C and the balance of Co).

Figure 20 shows an X-ray diffraction pattern for the resultant thin film. A sharp peak appears at 2 $\theta$ = 44.0°. Figure 21 shows a rocking curve at 2 $\theta$ = 44.0°. The half-value was 3.6° and the film is extremely excellent in the vertical orientation as in Example 1.

In the same manner as in Example 1, the specimen was fabricated into a floppy disc and the durability to a ring head was examined. As a result, the reduction in the output after 100,000 passes for the number of contact with the head was less than 1 dB, showing excellent characteristics as compared with the Co-Cr film. Since the W content is high, it is considered that the alloy target in this embodiment is not ferromagnetic.

Comparative Example 1

A thin film was prepared in the same manner as in Example 1 using an alloy target comprising Co-Cr-W (26 wt% of Cr, 5 wt% of W and the balance of Co).

Figures 22 and 23, respectively, shows an X-ray diffraction pattern and a rocking curve for the resultant thin film. A sharp peak appears at 2 $\theta$ = 44° in Figure 22 and, although it seems to be excellent in the vertical orientation, a peak shows a peculiar shape in the rocking curve of Figure 23 and it can be seen that the film is in a peculiar crystallized form.

Figure 24 shows the magnetic property of the specimen measured by a vibrating sample magnetometer. It can be seen that the specimen is almost non-magnetic.

If the crystals of the film are oriented vertically the rocking curve might show a symmetrical peak with respect to the vertical direction as the center (center of the figure). However, the peak shows a peculiar shape in Comparative Example 1 and it can be said that vertical orientation is not formed.

Comparative Examples 2-5

Ternary alloy films were prepared by in the same manner as in Example 1 using composite targets of the composition ratios: (31 wt% of Cr, 2 wt% of W and the balance of Co) in Comparative Example 2, (28 wt% of Cr, 4 wt% of W and the balance of Co) in Comparative Example 3, (30 wt% of Cr, 8 of wt% of W and the balance of Co) in Comparative Example 4 and (23 wt% of Cr, 20 wt% of W and the balance of Co) in Comparative Example 5, to obtain X-ray diffraction patterns. A peculiar peak (double peak, etc.) appears in each of the rocking curves showing that no vertical orientation is formed. The magnetic property for each of the specimens was almost non-magnetic. Comparative Example 2 is shown in Figures 25, 26, Comparative Example 3 is shown in Figures 27 and 28, Comparative Example 4 is shown in Figures 29 and 30 and Comparative Example 5 is shown in Figures 31 and 32.

In the case of using the composite target, most of the results show poor vertical orientation (double peak in the X-ray diffractometry) and the state of the resultant films are remarkably different depending on whether the target is made of an alloy or composite materials.

Example 7

An alloy thin film was prepared by sputtering using a quarternary composite target with the same composition as in the quarternary alloy according to the present invention (Co:Cr:W:C = 68:26:5:1). Figures 33 and 34 show the X-ray diffraction patterns.

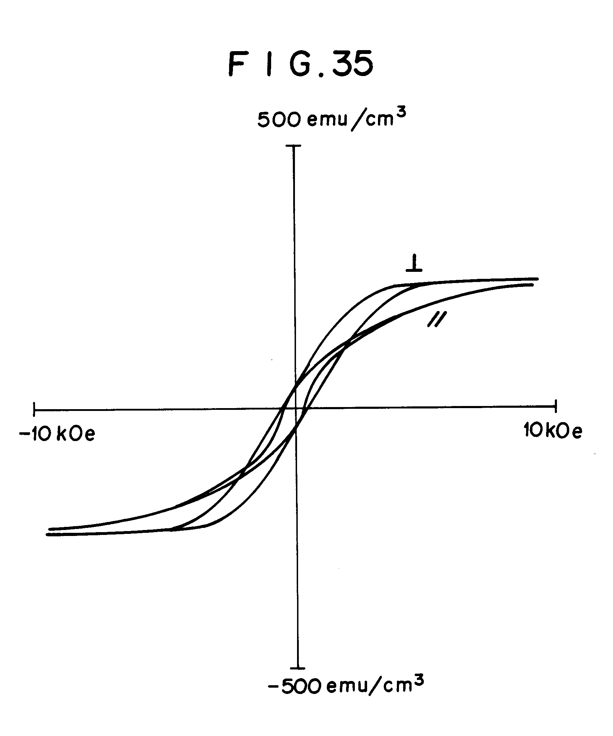

Although the vertically oriented film is formed, the half-value width in the rocking curve is 6.9° and the orientation is relatively poor as compared with the case of using the alloy target. Figure 35 shows the magnetic property and it can be seen that the vertical property is relatively poor as compared with the case of using the alloy target.

As apparent from the foregoings according to the present invention, it is possible to provide a vertical magnetic recording medium excellent in the vertical magnetic anisotropy and having excellent abrasion resistance not known in the prior art by incorporating W and C into the Co and Cr system magnetic film.

Further, according to the present invention, it is possible to form an alloy thin film in which the respective elements are mixed well with each other to form a homogenous and fine texture by using a quarternary alloy as a target.

## Claims

1. A vertical magnetic recording medium of excellent abrasion resistance comprising a thin alloy film containing Co, Cr, W and C as the essential ingredients, wherein the Co content is from 40 to 73 % by weight, the Cr content is from 23 to 32 % by weight, the W content is from 4 to 25 % by weight and the C content is from 0.1 to 3 %, by weight.

2. A method of manufacturing the vertical magnetic recording medium as defined in claim 1, in which the alloy film is prepared by a sputtering process, wherein an alloy comprising each of said four elements is used as a sputtering target.

## Revendications

1. Milieu d'enregistrement magnétique vertical à excellente résistance à l'abrasion, comprenant un film mince d'alliage contenant du Co, Cr, W et C à titre de constituants principaux, dans lequel la teneur en Co est comprise entre 40 et 73 % en poids, la teneur en Cr est comprise entre 23 et 32 % en poids, la teneur en W est comprise entre 4 et 25 % en poids, et la teneur en C est comprise entre 0,1 et 3 % en poids.

2. Procédé de fabrication du milieu d'enregistrement magnétique vertical de la revendication 1, selon lequel on prépare le film d'alliage par pulvérisation cathodique, un alliage comprenant chacun desdits quatre éléments étant utilisé en tant que cible de pulvérisation.

## Patentansprüche

1. Vertikal-magnetisches Aufzeichnungsmedium mit ausgezeichneter Abriebfestigkeit, welches einen dünnen Film einer Legierung, die Co, Cr, W und C als wesentliche Bestandteile enthält, worin der Co-Gehalt 40 bis 73 Gew.-%, der Cr-Gehalt 23 bis 32 Gew.-%, der W-Gehalt 4 bis 25 Gew.-% und der C-Gehalt 0,1 bis 3 Gew.-% beträgt, enthält.

2. Verfahren zur Herstellung des gemäß Anspruch 1 definierten vertikal-magnetischen Aufzeichnungsmediums, in welchem der Legierungs-Film mittels eines Zerstäubungs-Prozeßes, worin eine jedes der genannten vier Elemente enthaltende Legierung als Zerstäubungs-Target benutzt wird, hergestellt wird.

FIG.1

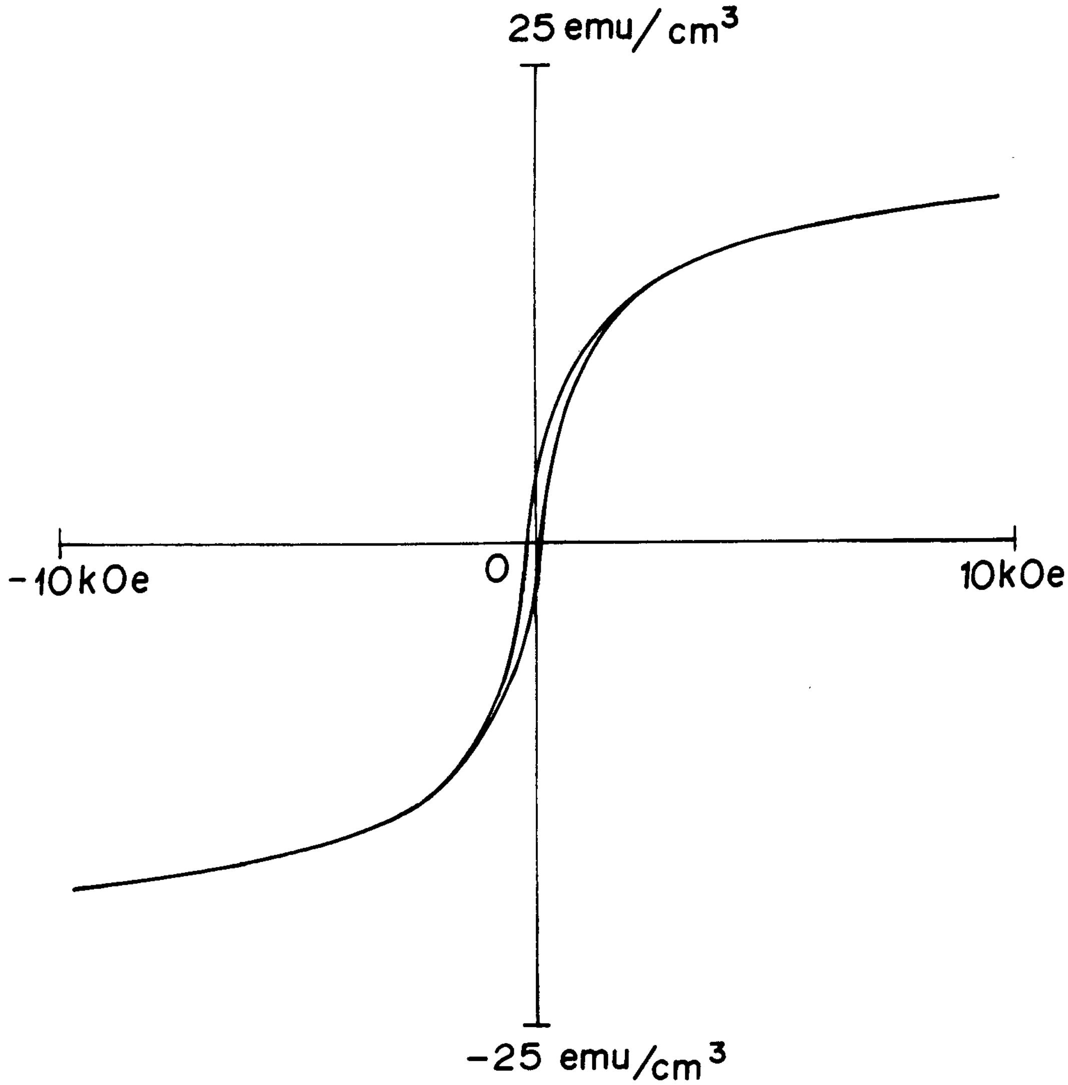

F I G.2

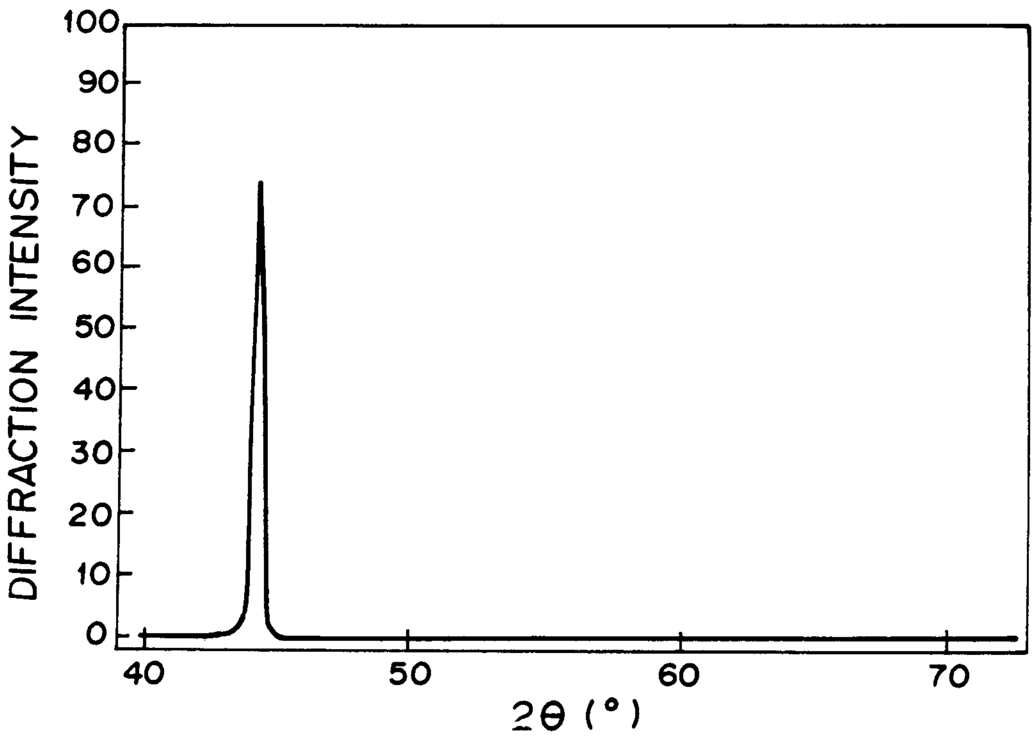
DIFFRACTION INTENSITY
100
90
80
70
60
50
40
30
20
10
0
40
50
60
70
2θ (°)

F I G.3

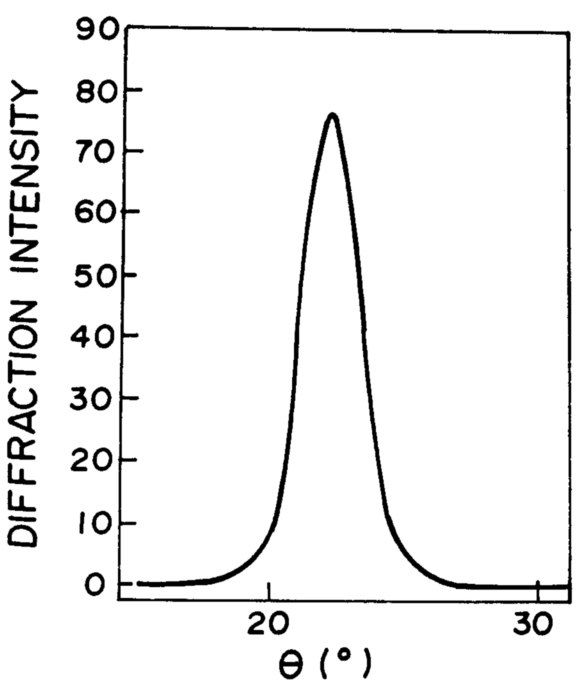
DIFFRACTION INTENSITY
90
80
70
60
50
40
30
20
10
0
20
30
θ (°)

FIG. 4

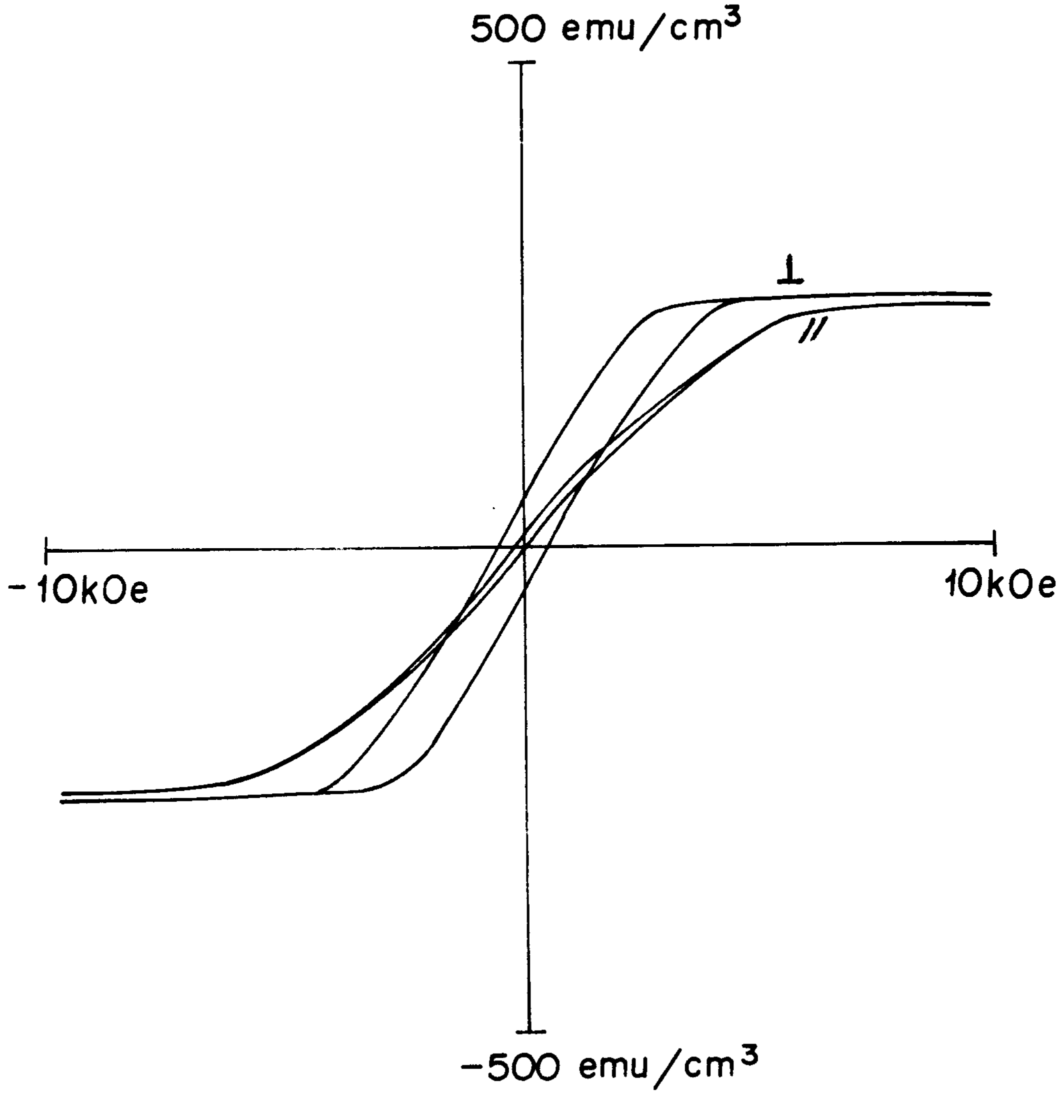

FIG.5

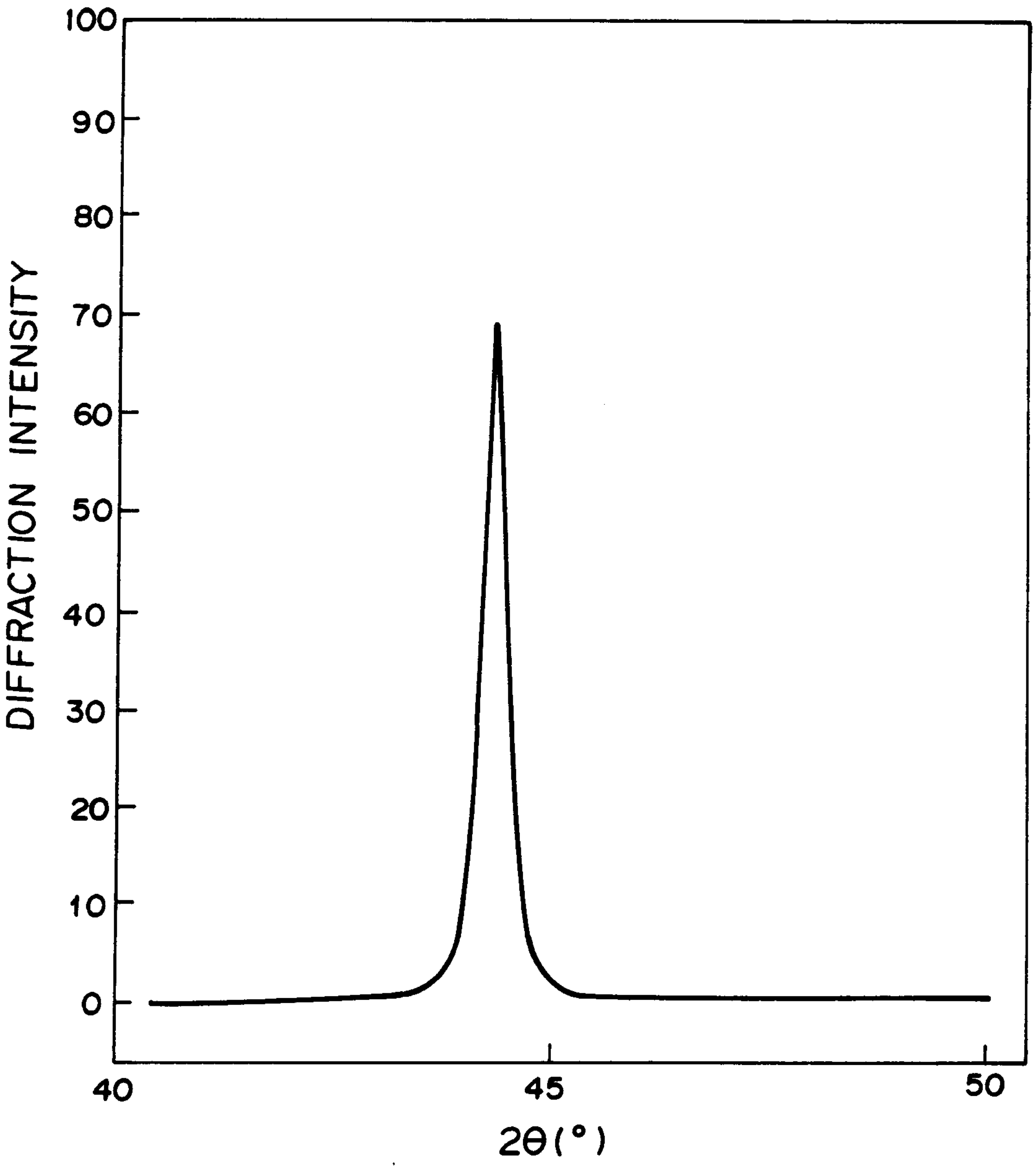
100
90
80
70
60
50
40
30
20
10
0
DIFFRACTION INTENSITY
40
45
50
2θ(°)

FIG.6

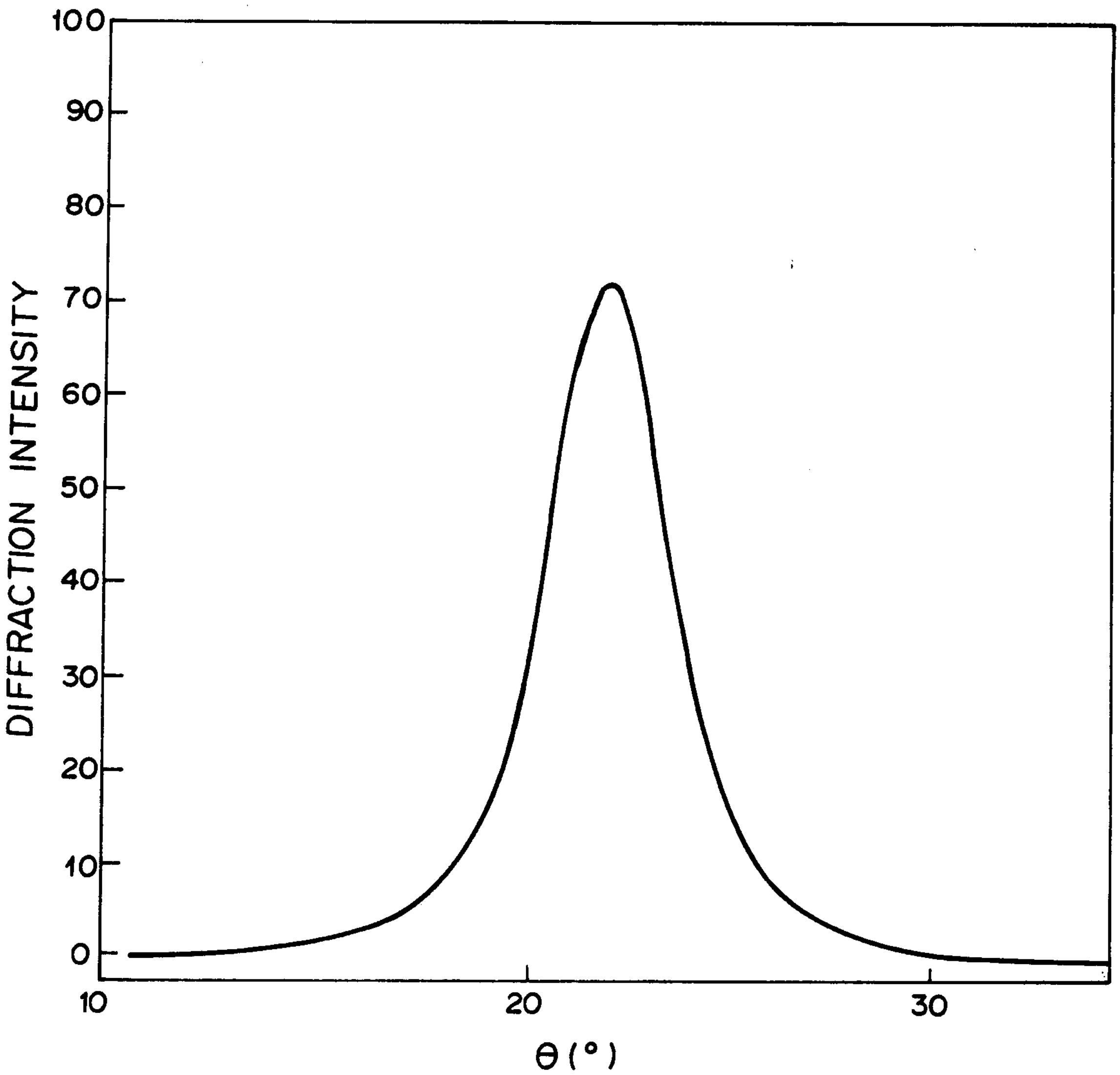

FIG.7

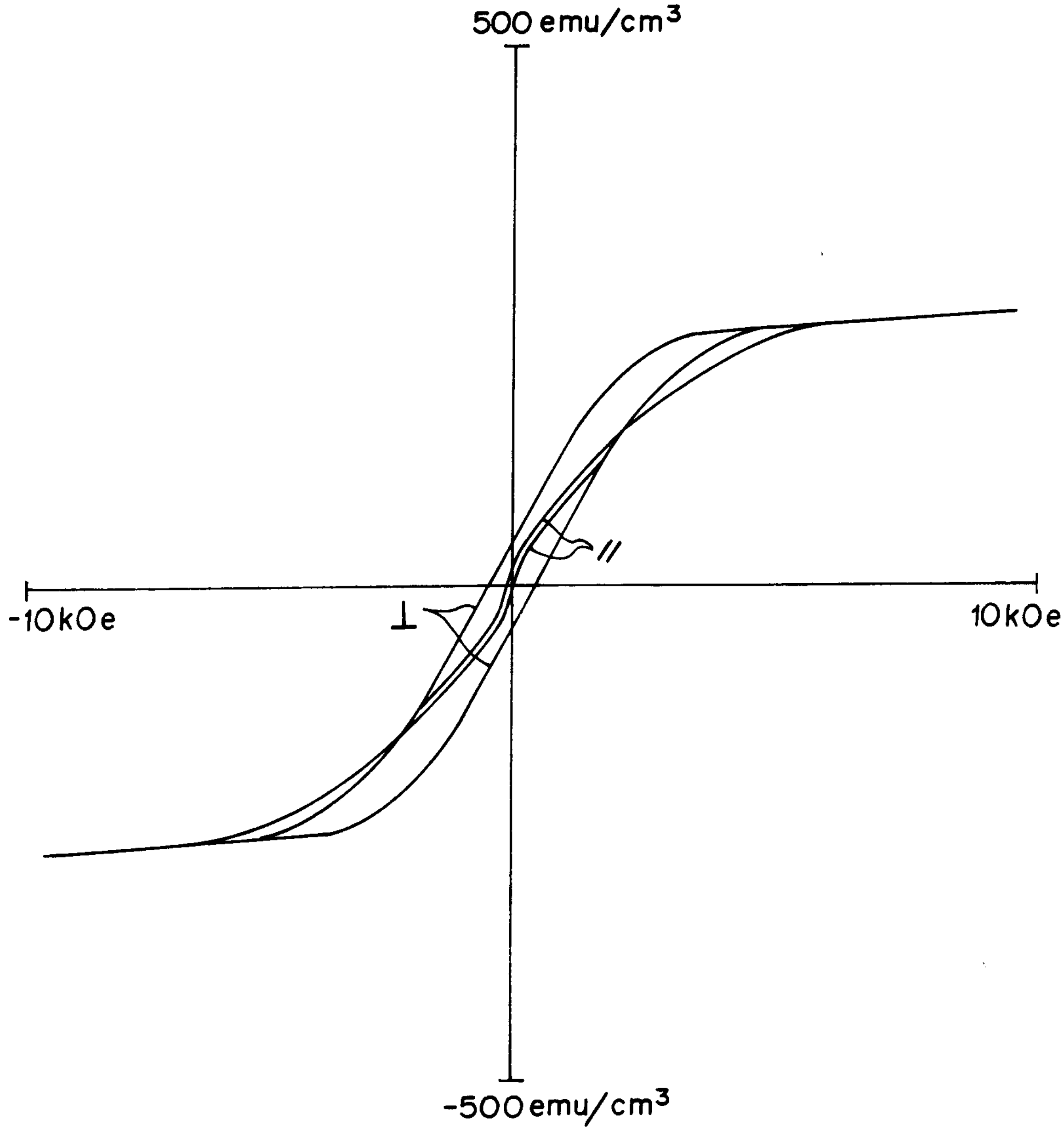

FIG.8

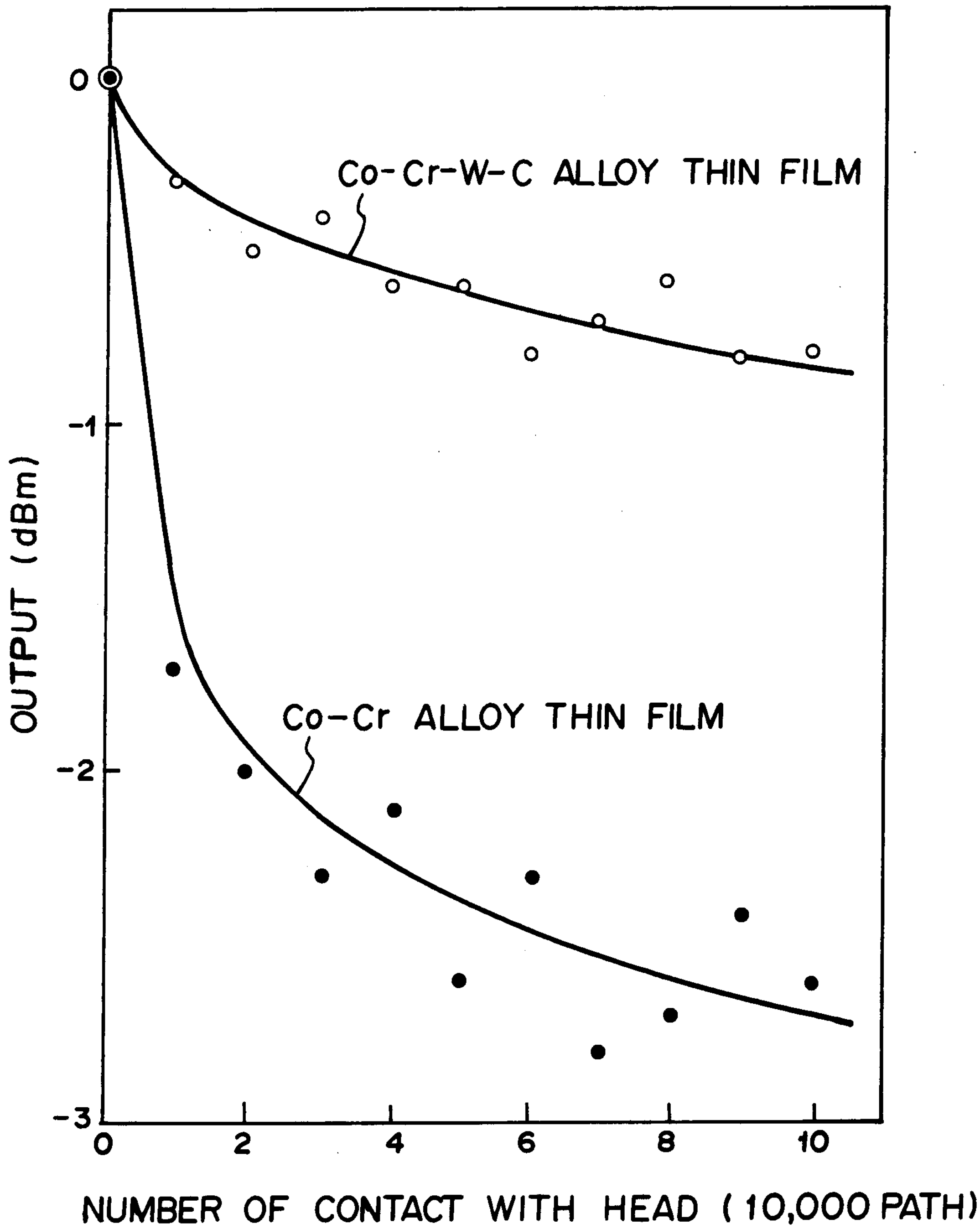
0
-1
-2
-3
OUTPUT (dBm)
Co-Cr-W-C ALLOY THIN FILM
Co-Cr ALLOY THIN FILM
0
2
4
6
8
10
NUMBER OF CONTACT WITH HEAD (10,000 PATH)

FIG. 9

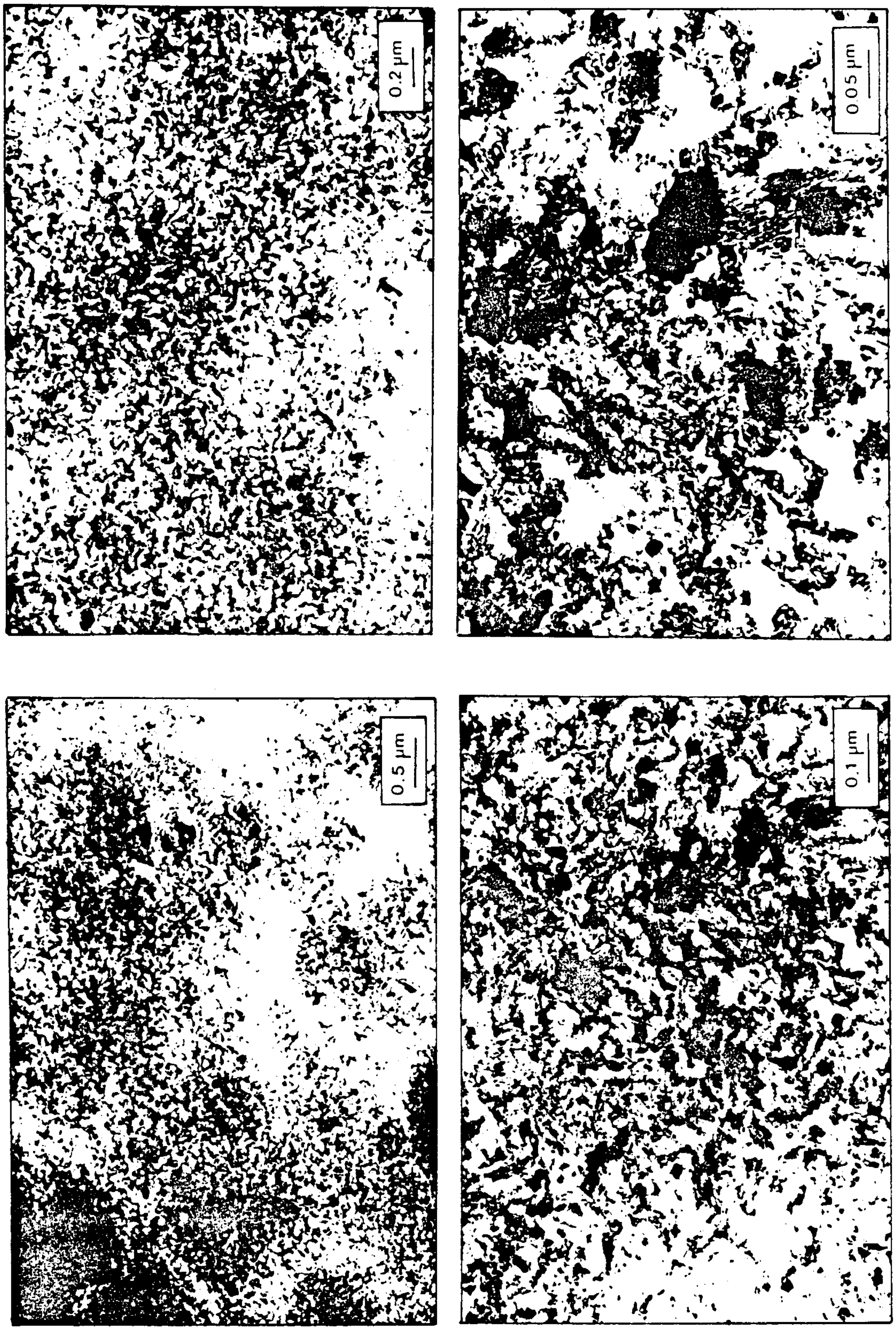

FIG.10

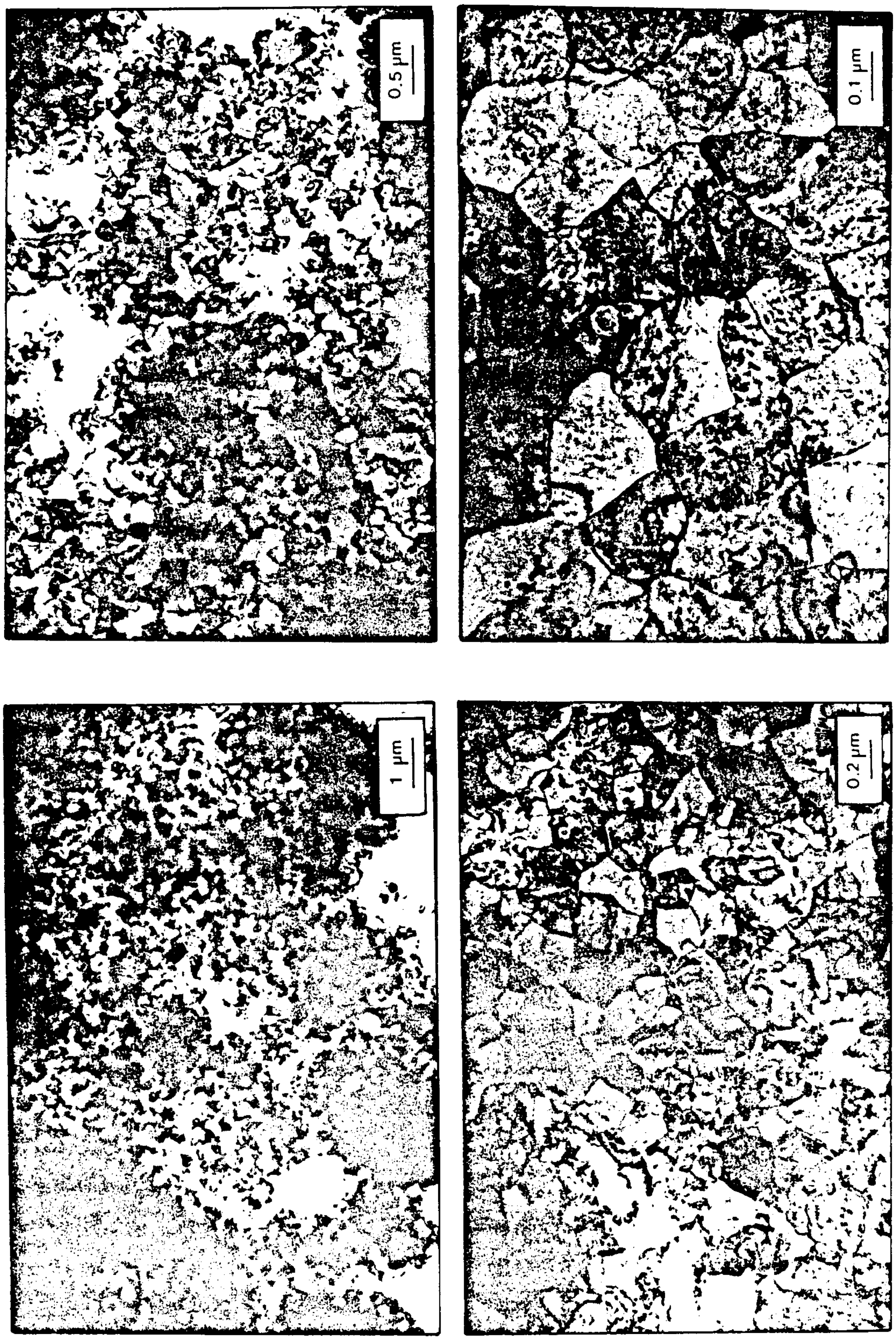

FIG.11

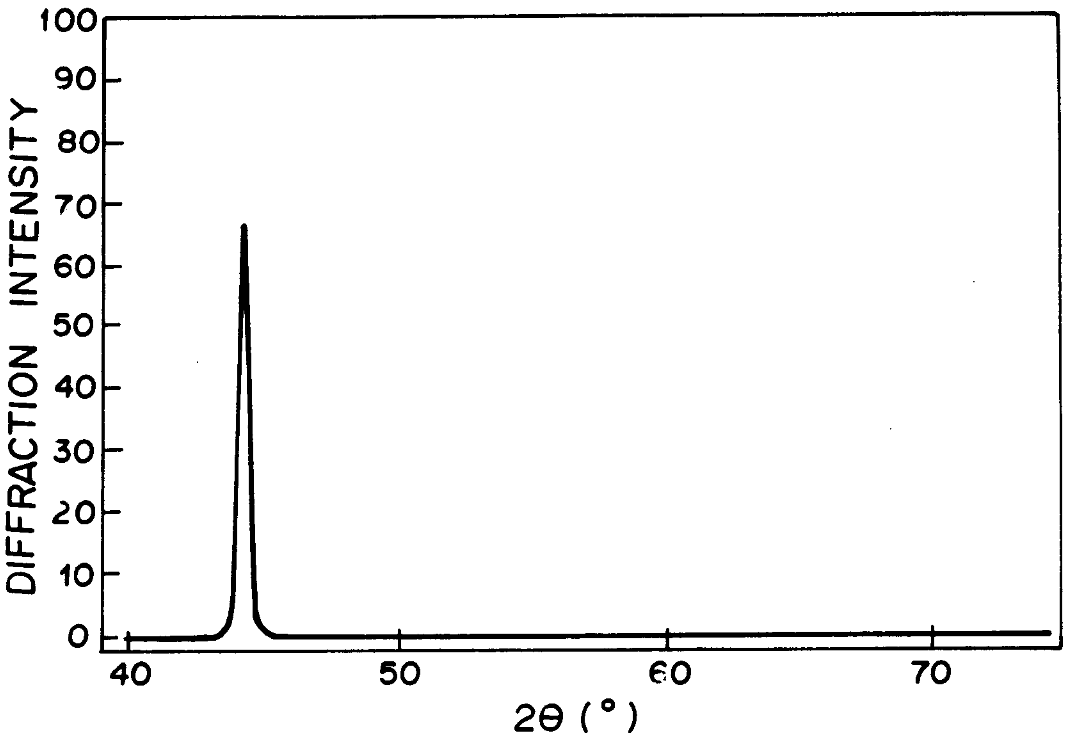
DIFFRACTION INTENSITY
100
90
80
70
60
50
40
30
20
10
0
40
50
60
70
2θ (°)

FIG.12

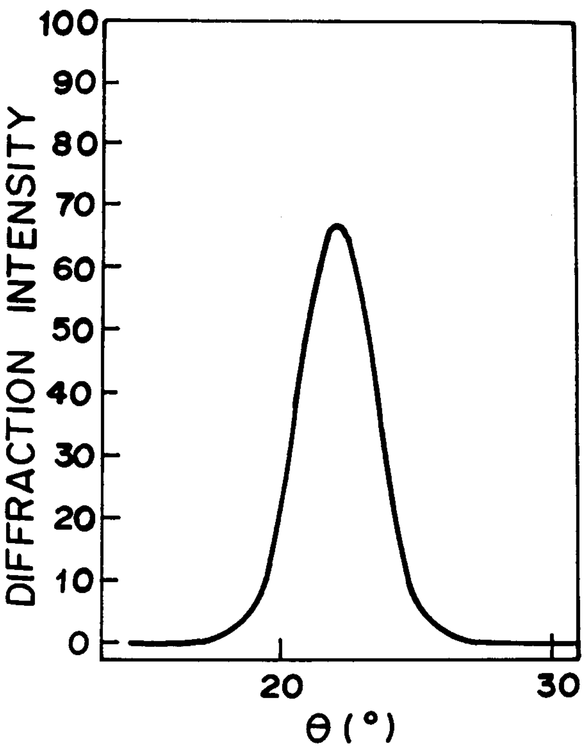
DIFFRACTION INTENSITY
100
90
80
70
60
50
40
30
20
10
0
20
30
θ (°)

FIG.13

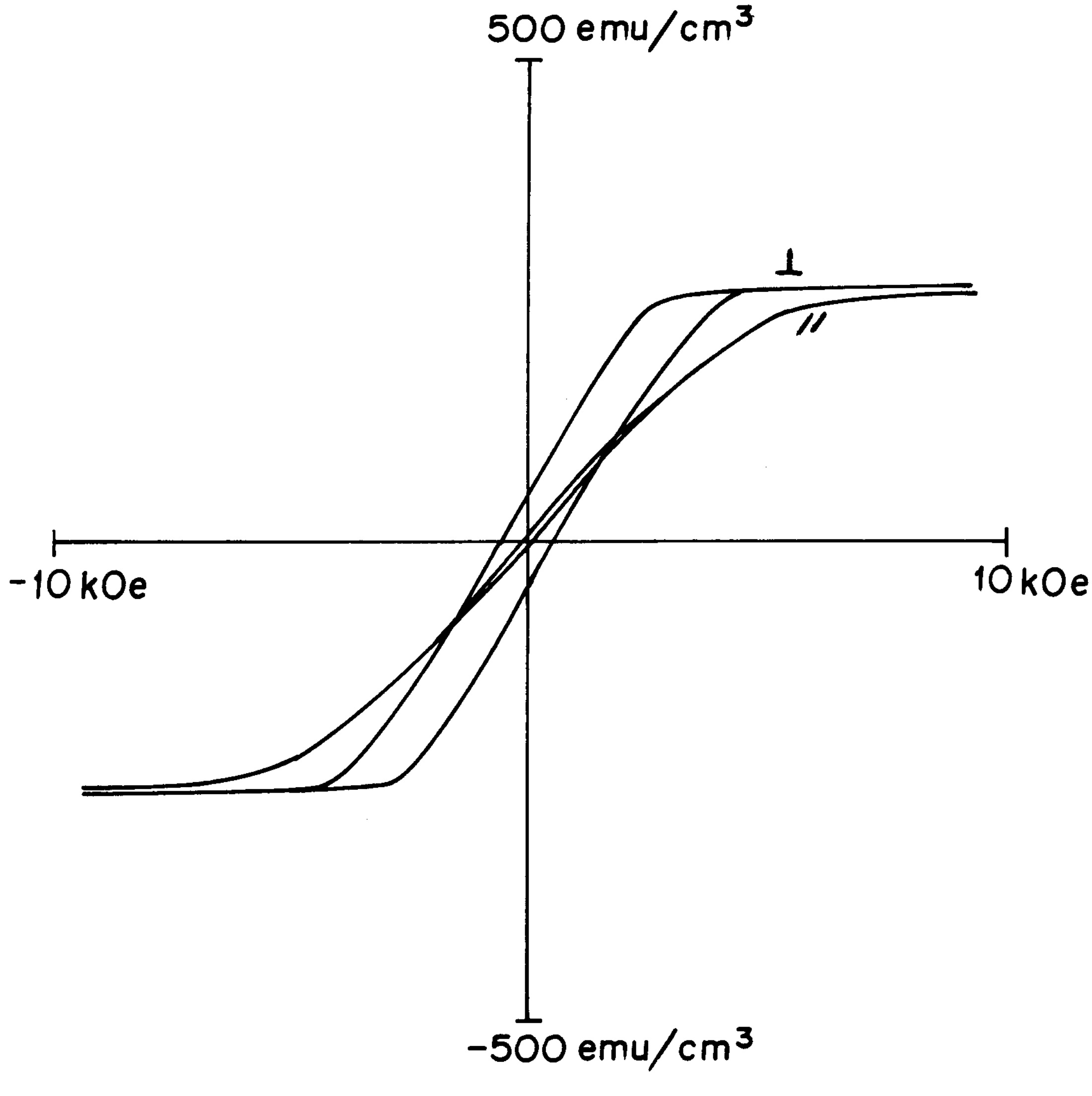

F I G.14

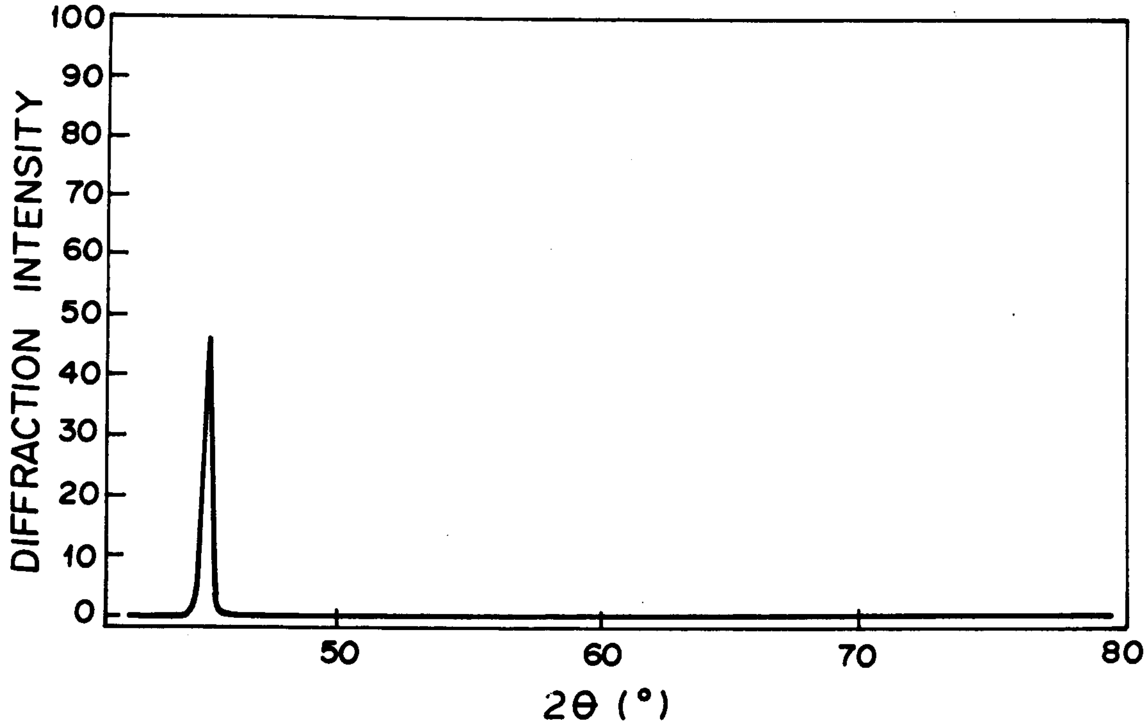
DIFFRACTION INTENSITY
100
90
80
70
60
50
40
30
20
10
0
50
60
70
80
2θ (°)

F I G.15

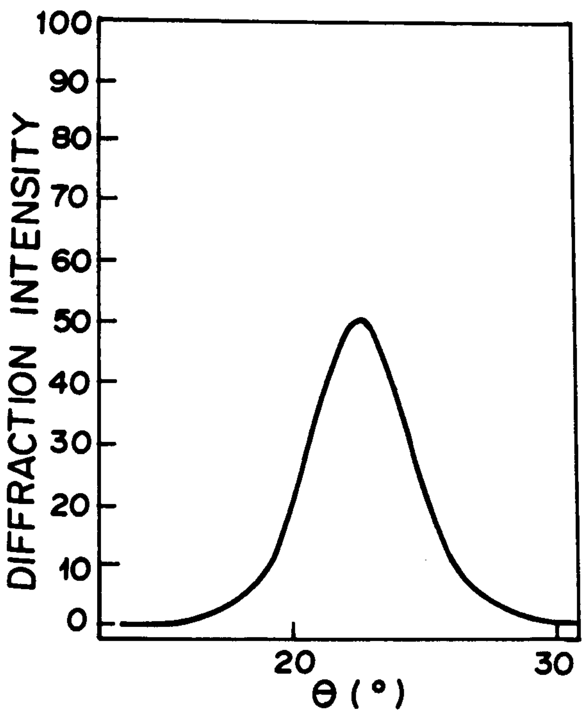
DIFFRACTION INTENSITY
100
90
80
70
60
50
40
30
20
10
0
20
30
θ (°)

FIG.16

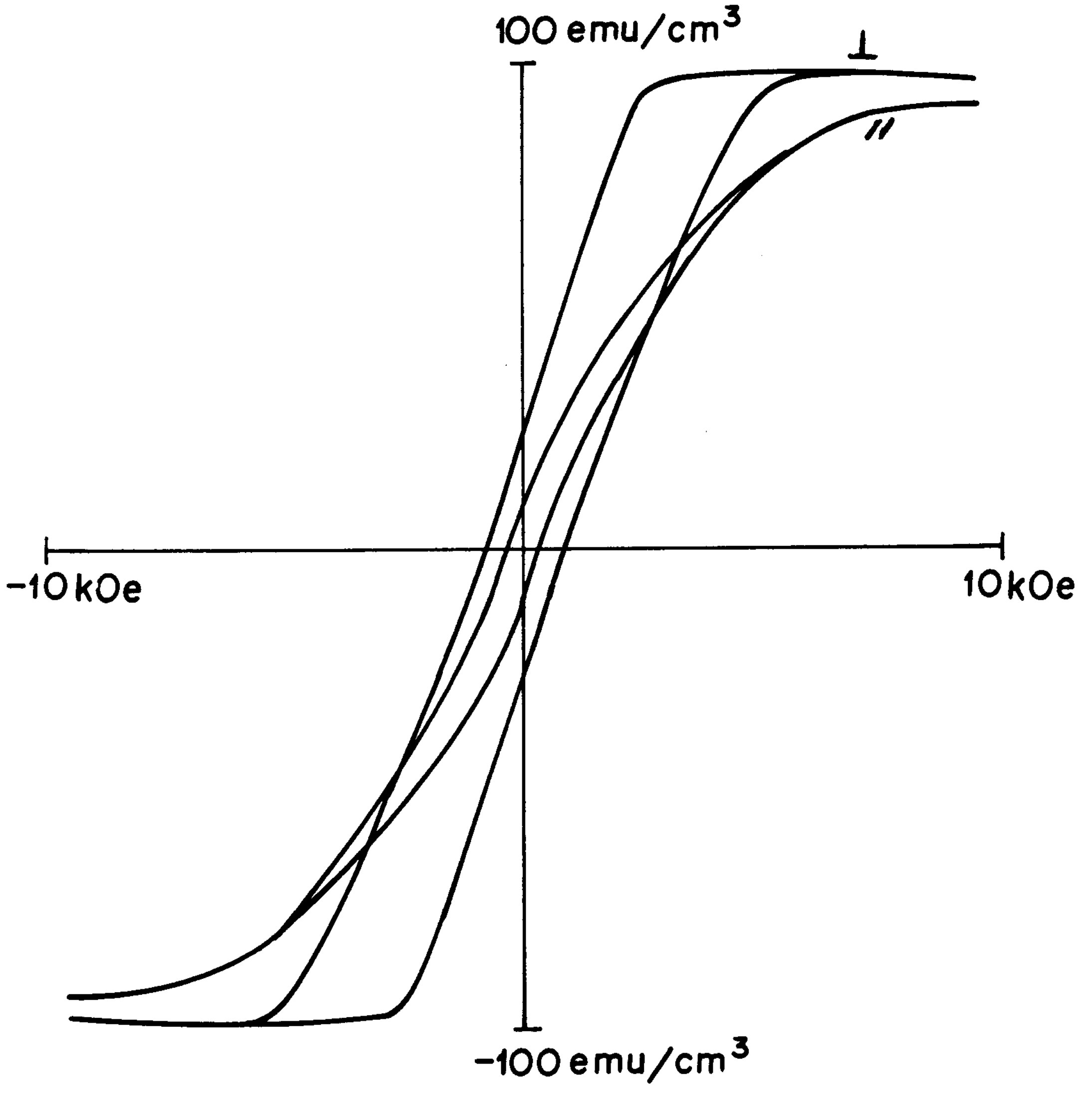

F I G.17

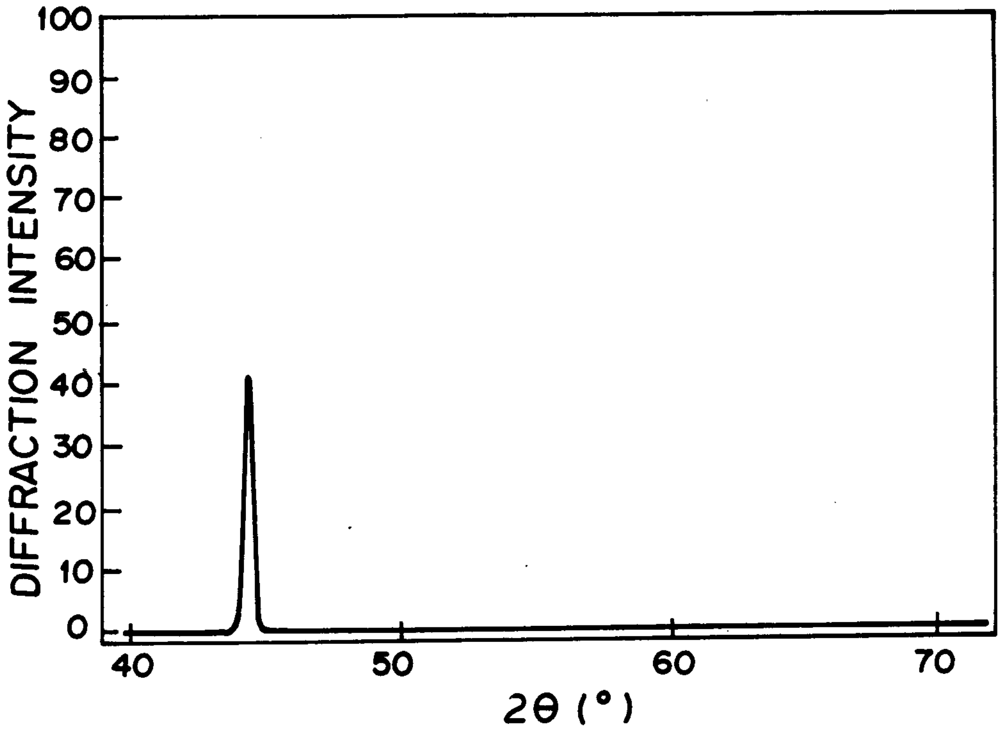
DIFFRACTION INTENSITY
100
90
80
70
60
50
40
30
20
10
0
40
50
60
70
2θ (°)

F I G.18

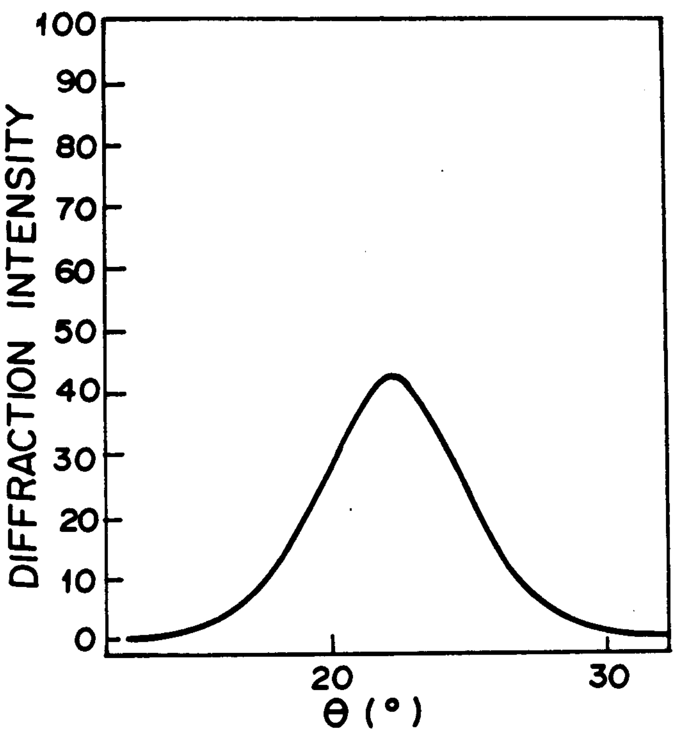
DIFFRACTION INTENSITY
100
90
80
70
60
50
40
30
20
10
0
20
30
θ (°)

FIG.19

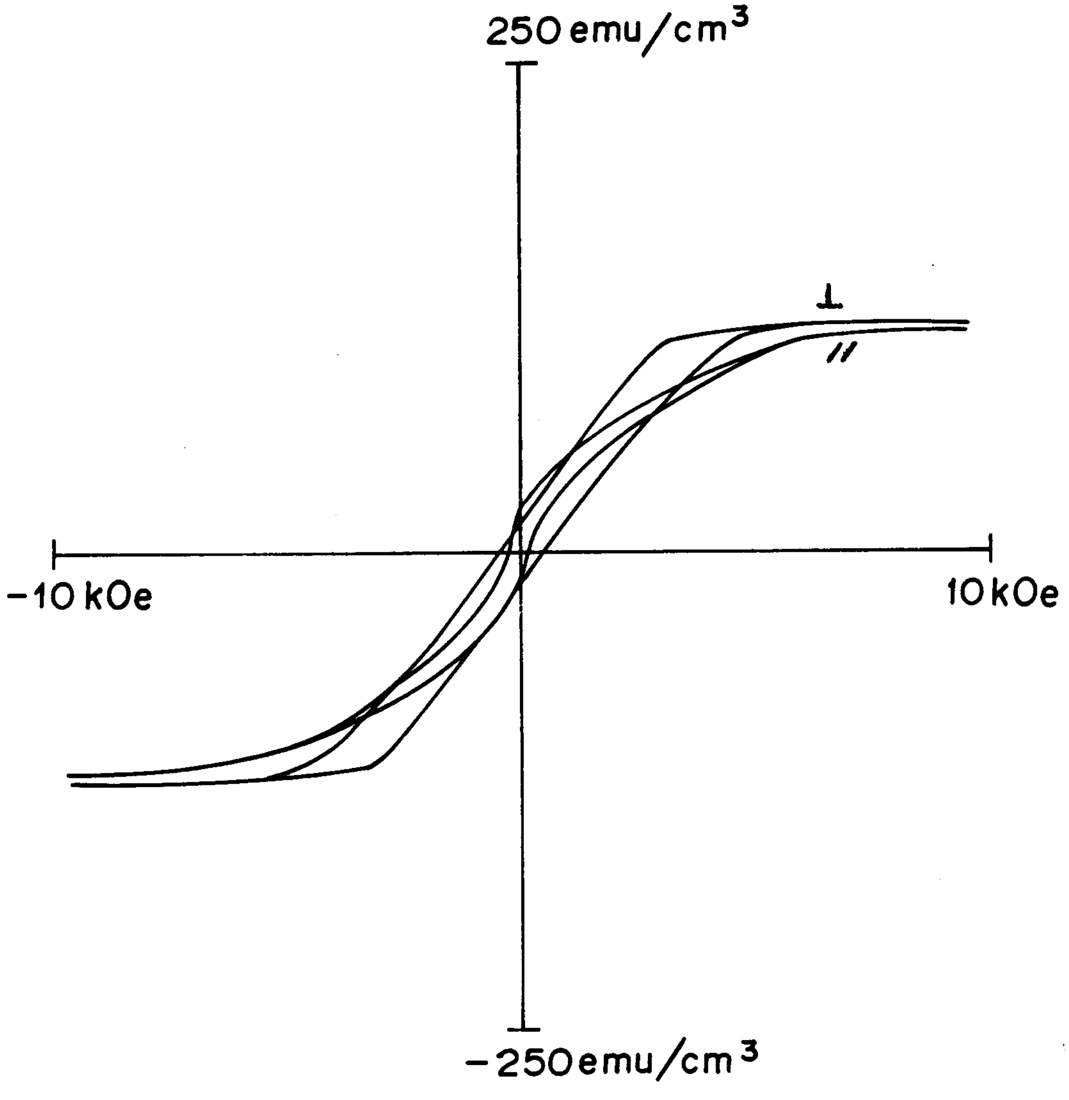

FIG.20

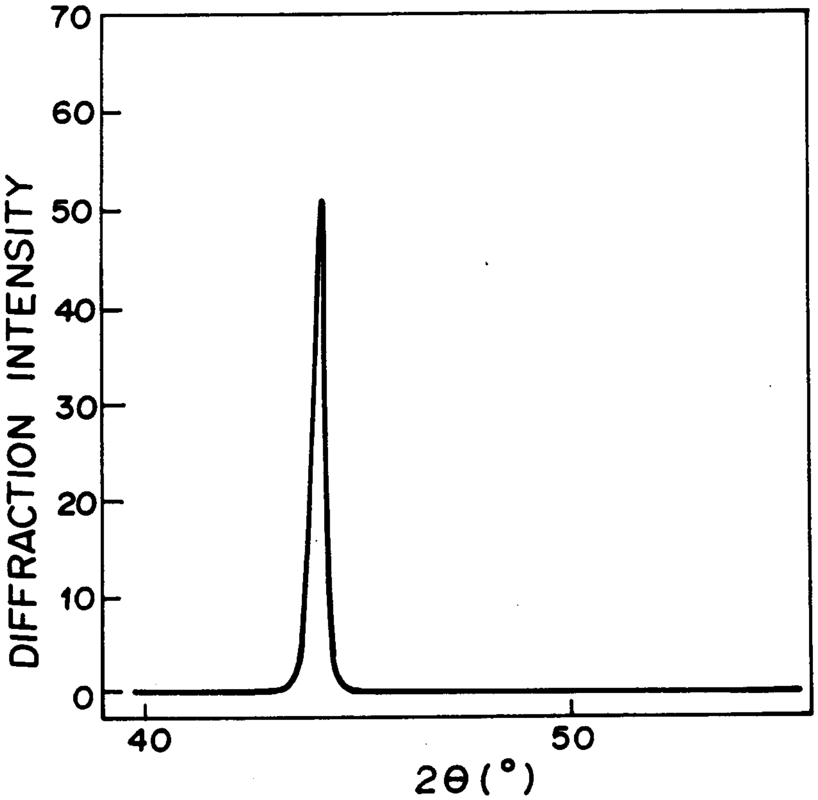
DIFFRACTION INTENSITY
70
60
50
40
30
20
10
0
40
50
2θ(°)

FIG.21

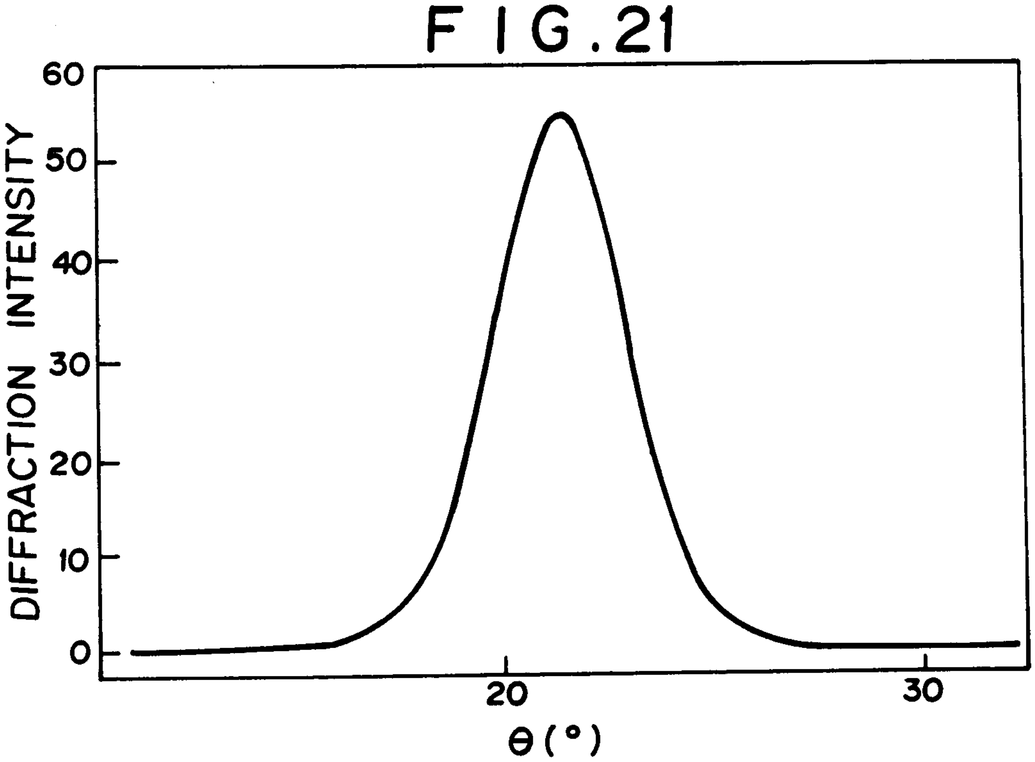
DIFFRACTION INTENSITY
60
50
40
30
20
10
0
20
30
θ(°)

FIG.22

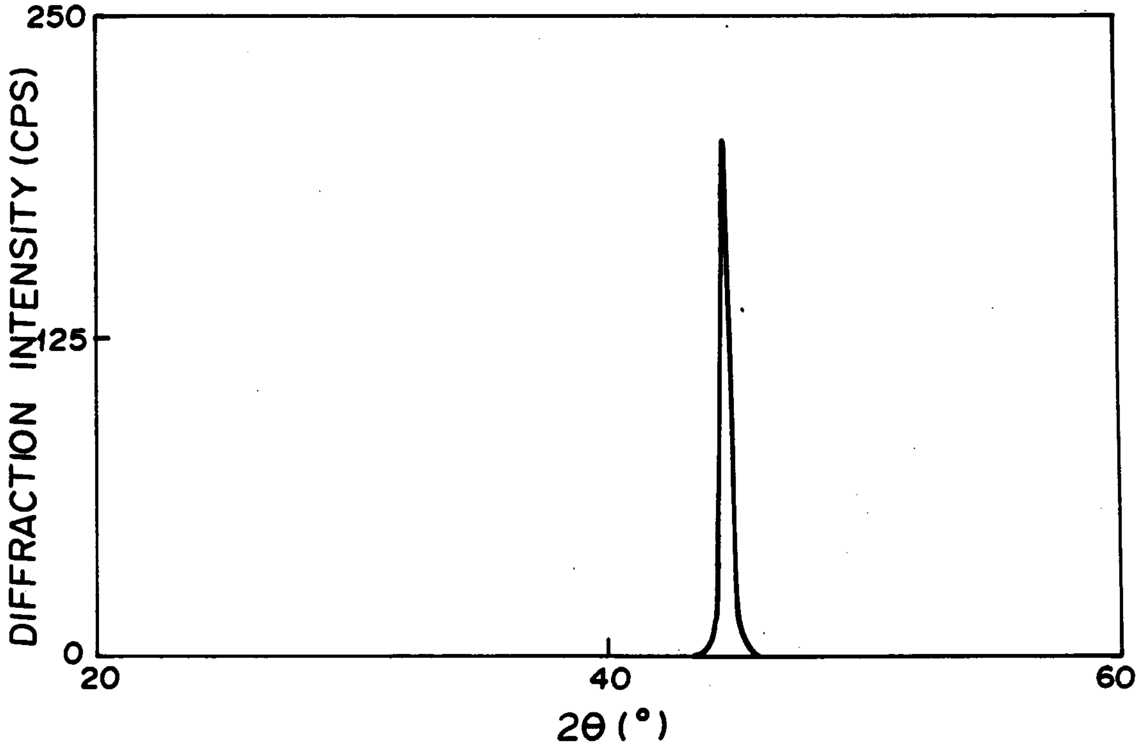
DIFFRACTION INTENSITY (CPS)
250
125
0
20
40
60
2θ (°)

FIG.23

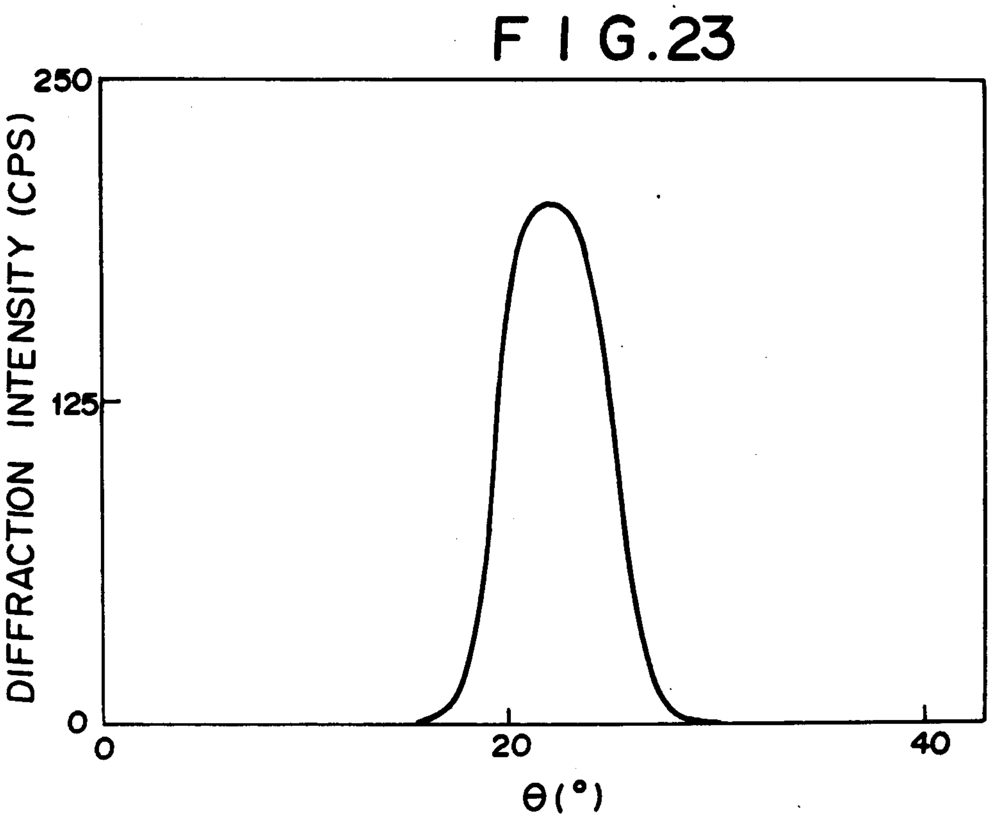
DIFFRACTION INTENSITY (CPS)
250
125
0
0
20
40
θ (°)

F I G.24

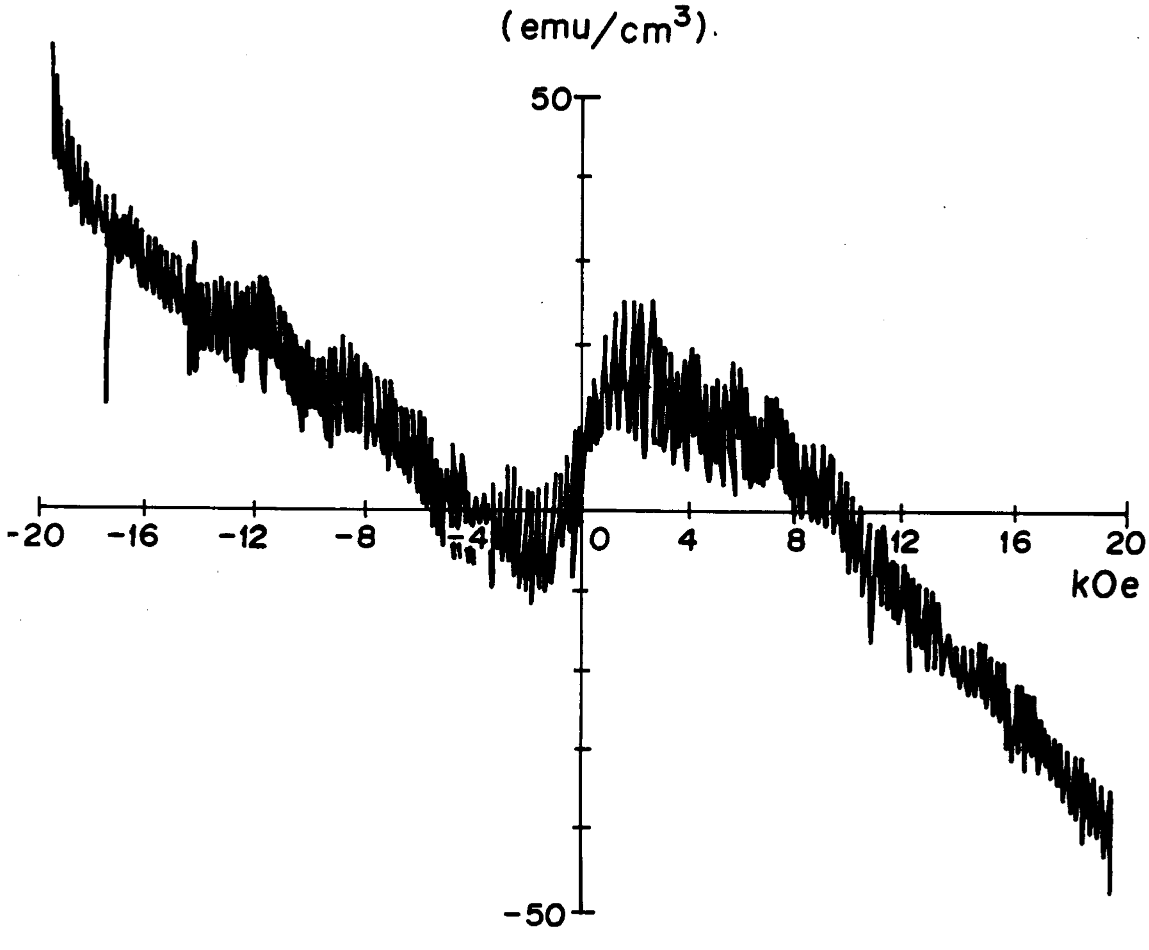

FIG.25

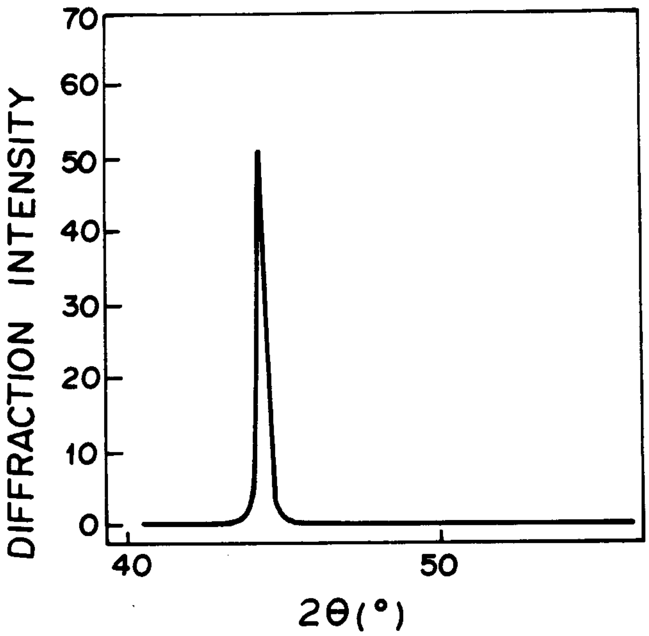
DIFFRACTION INTENSITY
70
60
50
40
30
20
10
0
40
50
2θ(°)

FIG.26

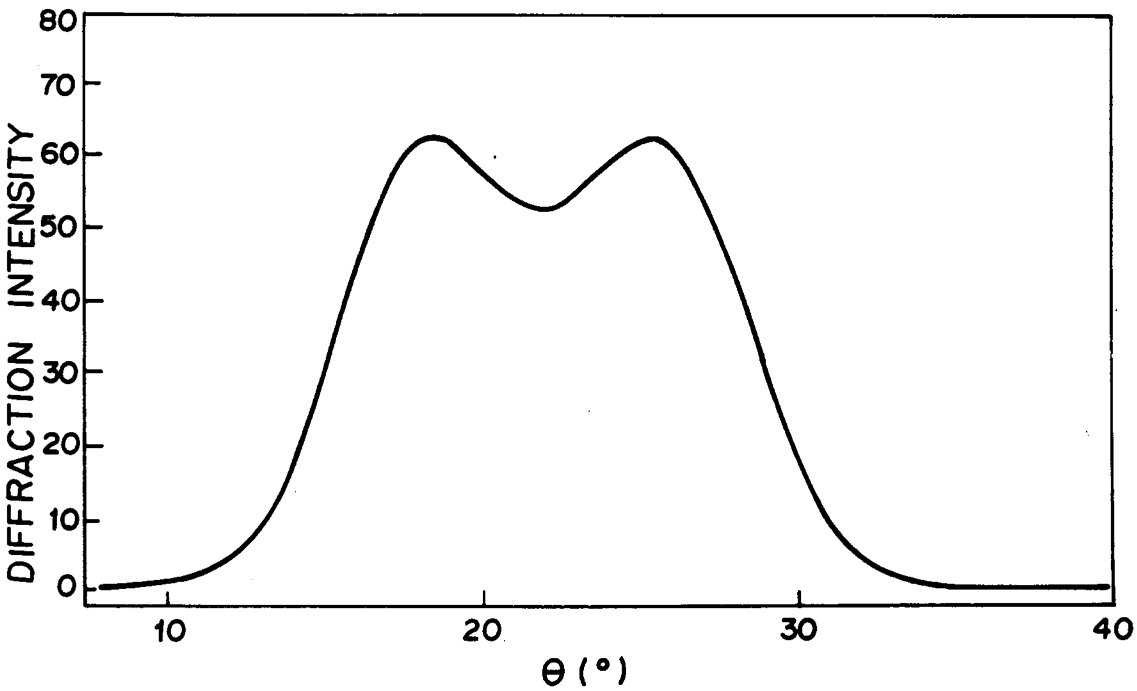
DIFFRACTION INTENSITY
80
70
60
50
40
30
20
10
0
10
20
30
40
θ(°)

F I G.27

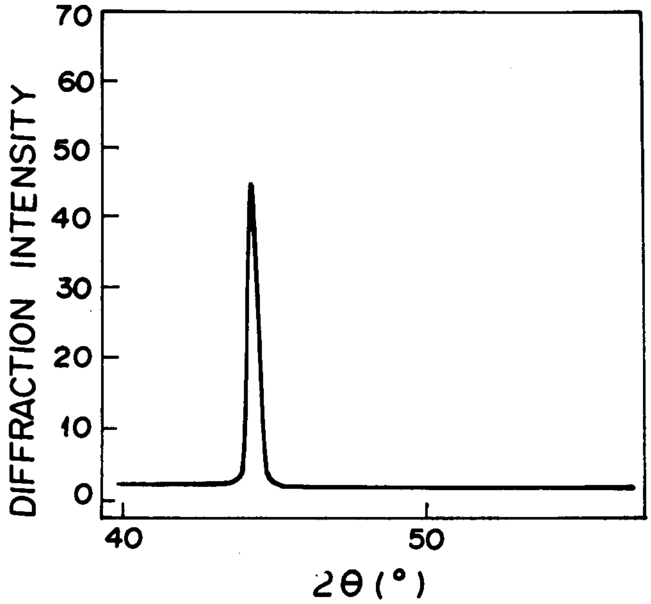
DIFFRACTION INTENSITY
70
60
50
40
30
20
10
0
40
50
2θ (°)

F I G.28

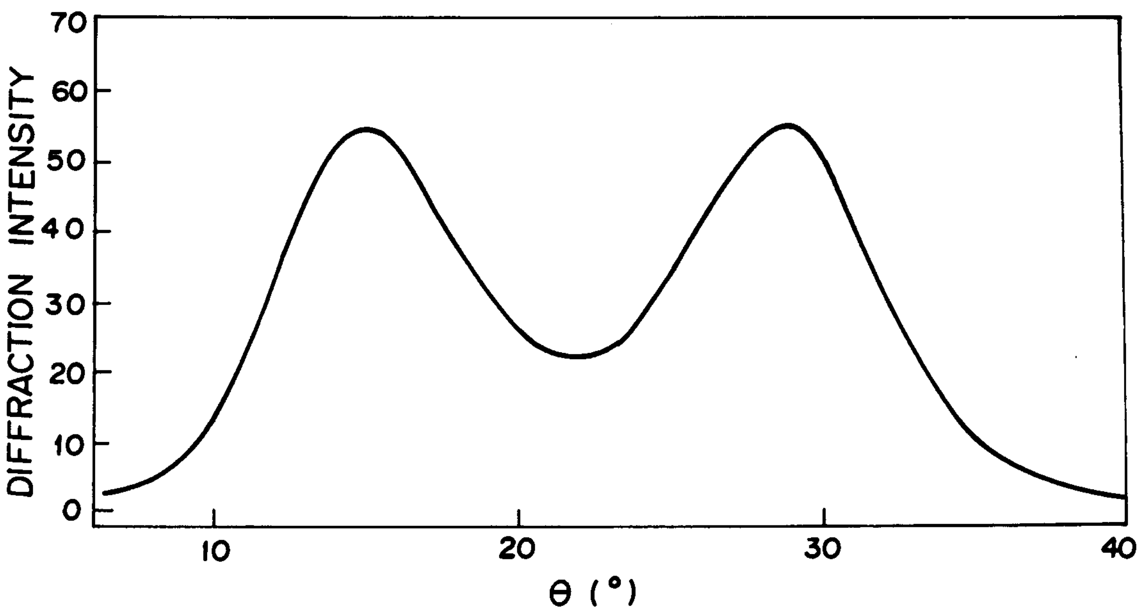
DIFFRACTION INTENSITY
70
60
50
40
30
20
10
0
10
20
30
40
θ (°)

F I G.29

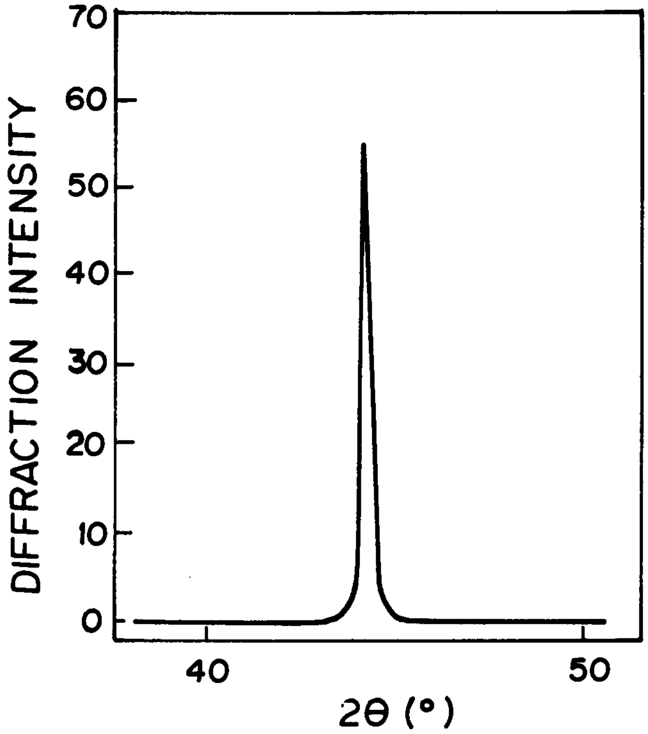
DIFFRACTION INTENSITY
70
60
50
40
30
20
10
0
40
50
2θ (°)

F I G.30

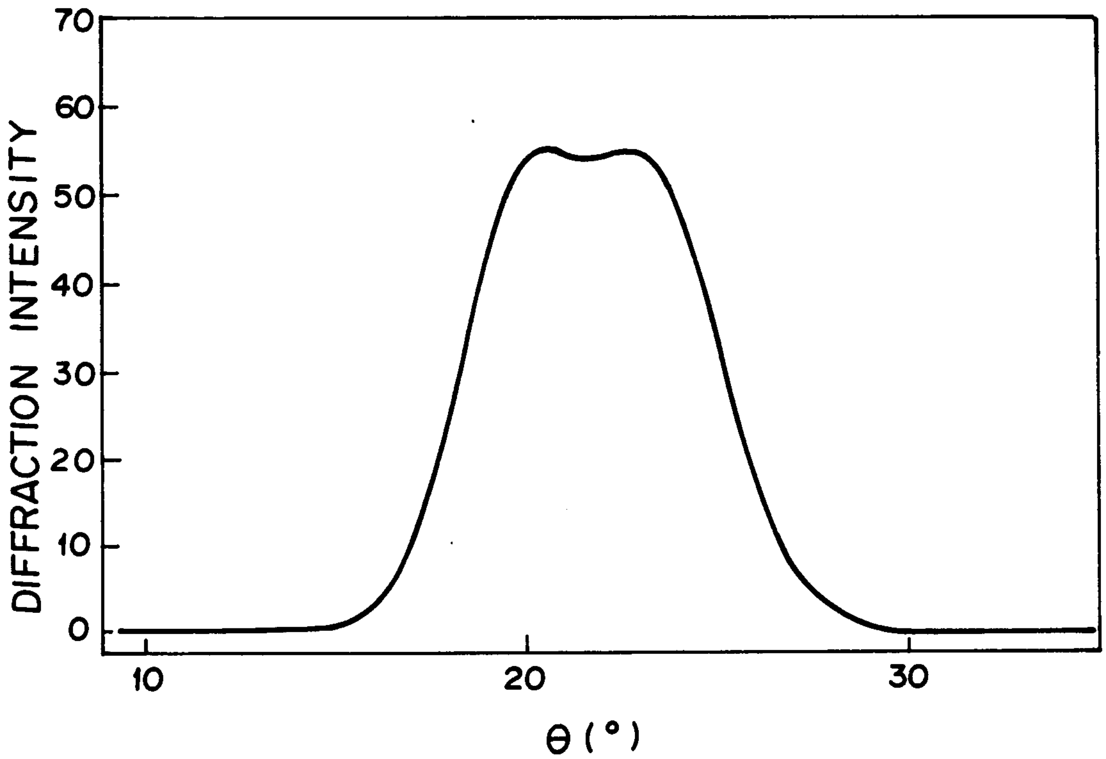
DIFFRACTION INTENSITY
70
60
50
40
30
20
10
0
10
20
30
θ (°)

F I G.31

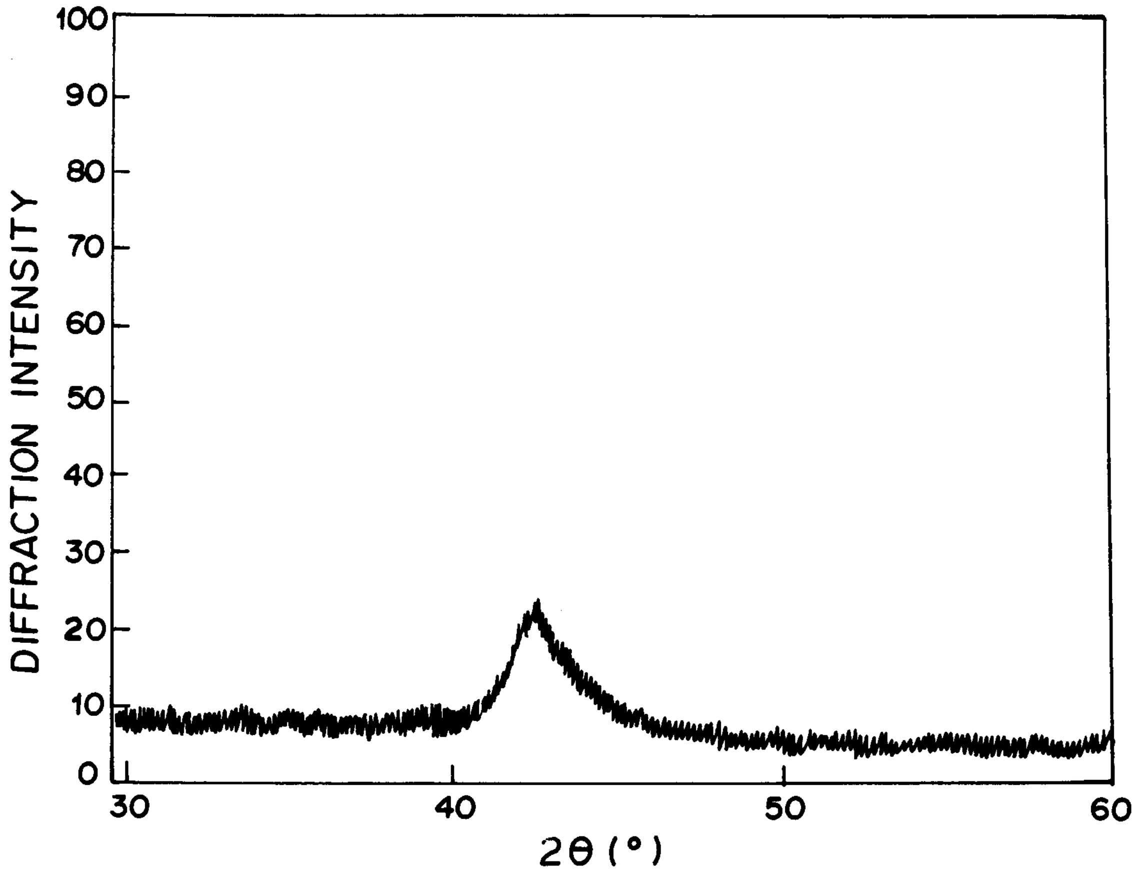
DIFFRACTION INTENSITY
100
90
80
70
60
50
40
30
20
10
0
30
40
50
60
2θ (°)

F I G.32

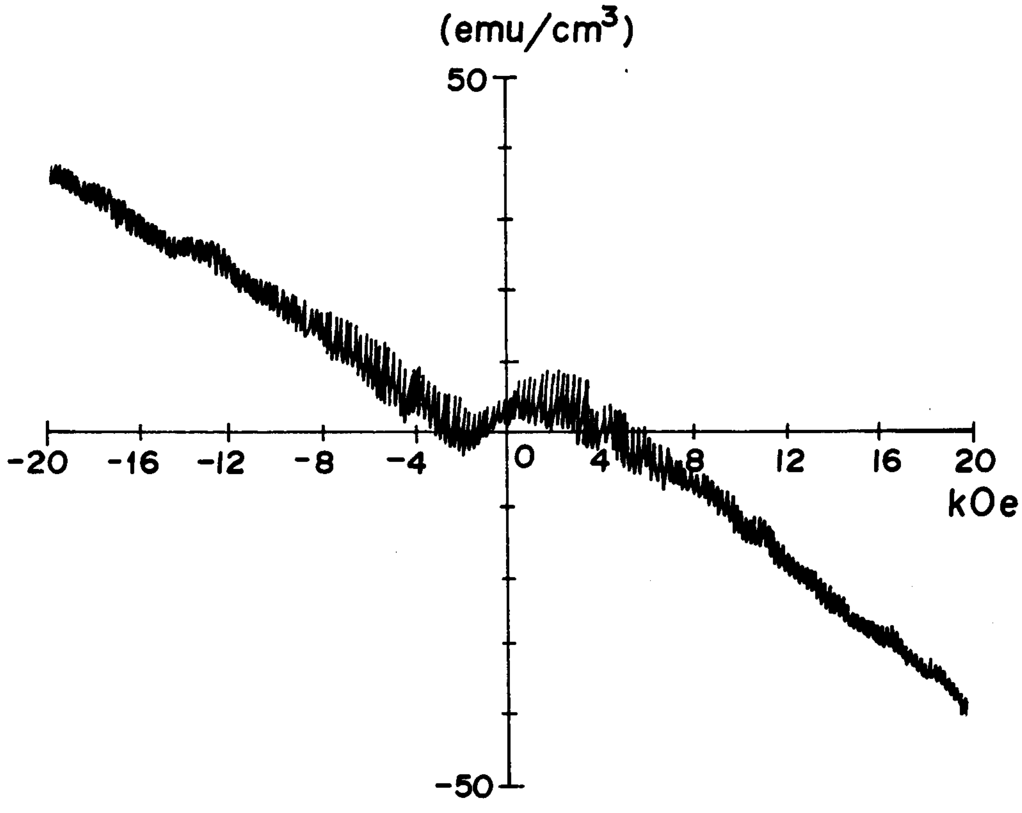
(emu/cm³)
50
-50
-20
-16
-12
-8
-4
0
4
8
12
16
20
kOe

F I G.33

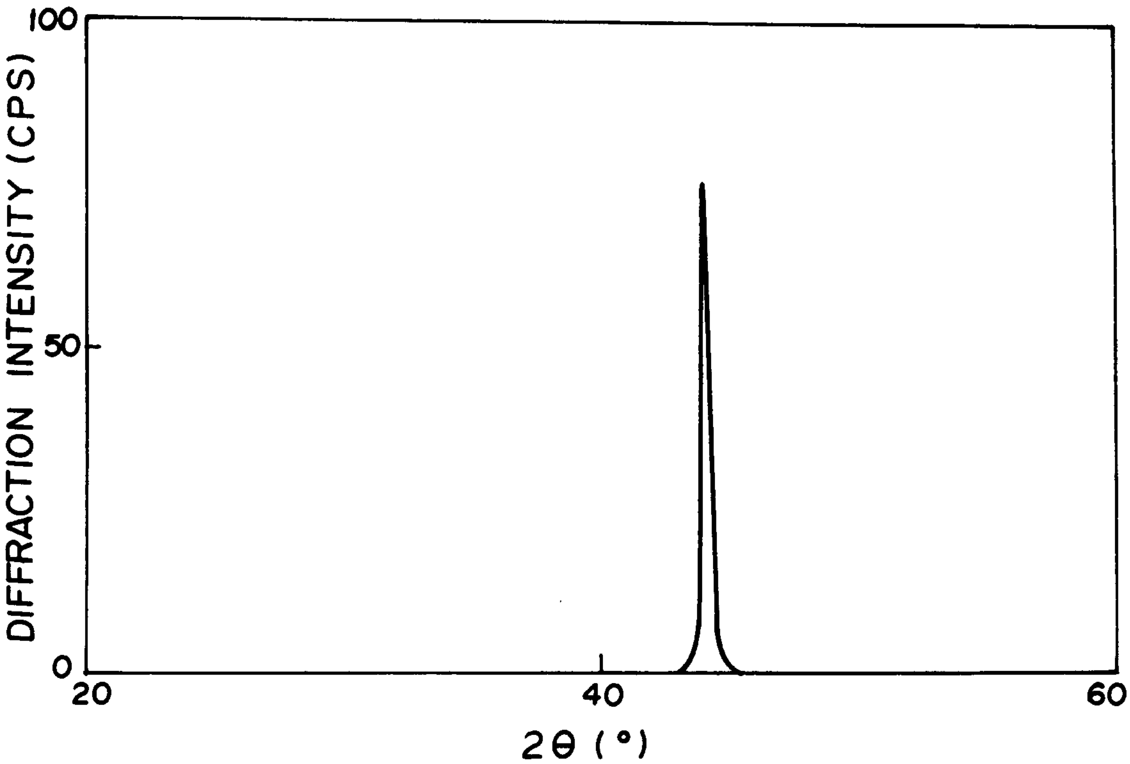
100
50
0
DIFFRACTION INTENSITY (CPS)
20
40
60
2θ (°)

F I G.34

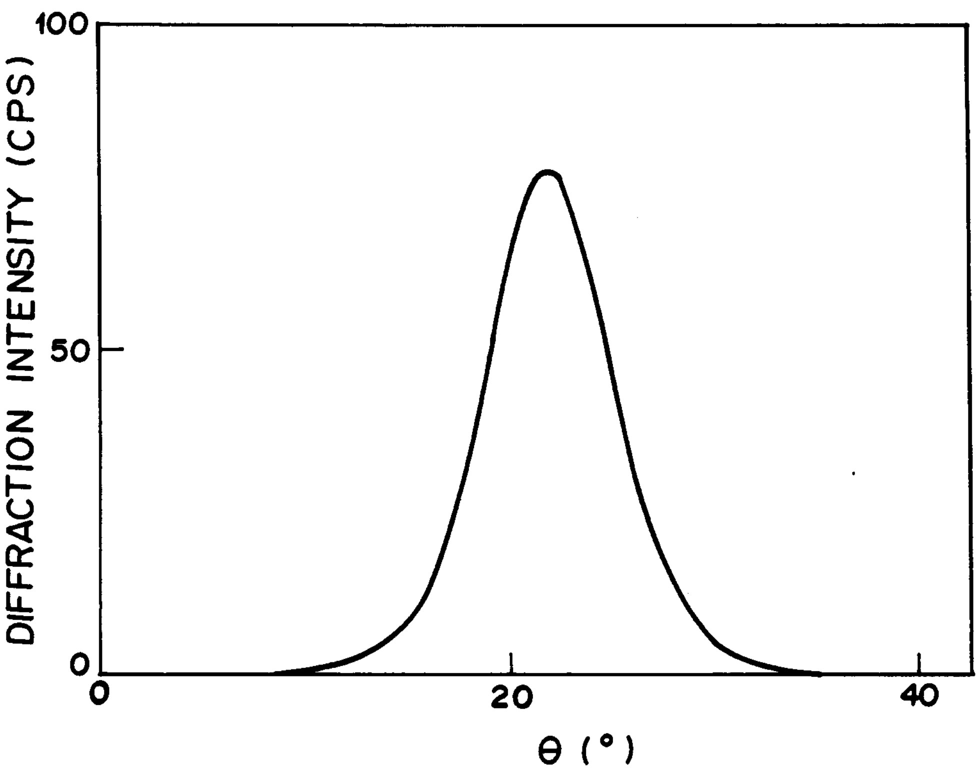
100
50
0
DIFFRACTION INTENSITY (CPS)
0
20
40
θ (°)

F I G. 35